# EUROPEAN PATENT APPLICATION

(11) **EP 3 211 960 A1**
(43) Date of publication of application: **30.08.2017**
(21) Application number: 17166167.1
(22) Date of filing: 07.12.2012
(51) Int. Cl.: H04W 76/02, H04W 88/04

(54) **BASE STATION FOR SELECTING A HELPER WIRELESS TRANSMIT/RECEIVE UNIT**

(30) Priority: 08.12.2011 US 201161568332 P
(62) Divisional of application: 12805869.0
(71) Applicant: Interdigital Patent Holdings, Inc., Wilmington, DE 19809 (US)
(72) Inventor: PRAGADA, Ravikumar V., Collegeville, PA 19426 (US); DENG, Tao, Roslyn, NY 11576 (US); RAGHOTHAMAN, Balaji, Chester Springs, PA 19425 (US); DENG, Zhuorong, Brooklyn, NY 11223 (US); STERNBERG, Gergory S., Mt. Laurel, NJ 08054 (US); VANGANURU, Kiran K., San Diego, CA 92128 (US)
(74) Representative: Awapatent AB

(57) **Abstract**

A method and apparatus for controlling crosslink, XL, establishment are disclosed. In the method and apparatus, the XL (203) between a terminal wireless transmit/receive unit, T-WTRU, (201) and a helper WTRU, H-WTRU, (202) is controlled, whereby the T-WTRU (201) and the H-WTRU (202) may be in a radio resource control, RRC, Idle mode and may perform discontinuous reception, DRX. Further, the T-WTRU (201) may transition between infrastructure coverage mode and WTRU-to-WTRU, W2W coverage mode. Additionally, neighbor discovery and H-WTRU selection are performed and association between the T-WTRU (201) and H-WTRU (202) is established and maintained.

## Description

### CROSS REFERENCE TO RELATED APPLICATIONS

This application claims the benefit of U.S. provisional application No. 61/568,332 filed on December 8, 2011, the contents of which are hereby incorporated by reference herein as if fully set forth.

### BACKGROUND

As user demand for wireless data services continues to grow, the deployment of network infrastructure to support the user demand has proliferated. The increase in network infrastructure has been aimed at shrinking the size of wireless communication cells in order to increase network coverage and capacity for supporting both a growing number of users and increased data usage by the users. One drawback of the increasing network size is the increased overhead due to the large amount of resulting mobility events.

To provide network coverage for an out-of-coverage device, wireless devices which are within network coverage may be used to relay data from the out-of-coverage wireless devices to the network. A cross link (XL) is established between the out-of-coverage device and the device having network coverage. The XL facilitates data traffic with the network. Further, when both devices are within network coverage, the XL may be used to provide increased capacity to either device.

It is desirable to have a method and apparatus for controlling XL establishment between wireless devices, whereby the wireless devices may be in Idle mode. It is also desirable for the method and apparatus to enable handover between infrastructure coverage and wireless device coverage.

### SUMMARY

A method and apparatus for controlling cross like establishment are provided. In the method and apparatus, a terminal wireless transmit/receive unit (T-WTRU) may establish a cross link (XL) with a helper WTRU (H-WTRU). The T-WTRU may include a receiver for receiving receive basic system information from the H-WTRU. The T-WTRU may include a processor configured to determine whether to establish a XL with the H-WTRU based on the basic system information. On a condition that the T-WTRU determines to establish a XL with the H-WTRU, the T-WTRU further includes a transmitter configured to transmit a selected as H-WTRU message to the H-WTRU.

The basic system information may includes a public land mobile network (PLMN) Identity List, a tracking area code, or a cell identity associated with the H-WTRU. Additionally, the processor of the T-WTRU may determine not to establish the XL with the H-WTRU on a condition that the T-WTRU is barred from the cell associated with the H-WTRU. In one embodiment, the processor determines to establish the XL with the H-WTRU on a condition that the T-WTRU requires the XL for an emergency call.

### BRIEF DESCRIPTION OF THE DRAWINGS

A more detailed understanding may be had from the following description, given by way of example in conjunction with the accompanying drawings wherein:
FIG. 1A is a system diagram of an example communications system in which one or more disclosed embodiments may be implemented;
FIG. 1B is a system diagram of an example wireless transmit/receive unit (WTRU) that may be used within the communications system illustrated in FIG. 1A;
FIG. 1C is a system diagram of an example radio access network and an example core network that may be used within the communications system illustrated in FIG. 1A;
FIG. 2A shows a terminal wireless transmit receive unit (T-WTRU) having a cross link (XL) with a terminal wireless transmit receive unit (H-WTRU);
FIG. 2B shows cell or base station reselection for direct traditional link (TRL) establishment;
FIG. 2C shows XL establishment based on TRL establishment failure;
FIG. 3 shows a XL establishment procedure;
FIG. 4 shows the radio resource control (RRC) states of a WTRU;
FIG. 5 shows the RRC substates of a WTRU;
FIG. 6 shows handover from infrastructure coverage mode to WTRU-to-WTRU (W2W) coverage mode;
FIG. 7 shows a message flow diagram for triggering W2W coverage;
FIG. 8 shows a state diagram of cell selection or reselection and triggering W2W coverage;
FIGs. 9A and 9B show neighbor discovery by a NS-WTRU;
FIG. 10 shows a message flow diagram for reporting neighbor discovery to a network in centralized H-WTRU selection;
FIG. 11 shows a message flow diagram for H-WTRU selection;
FIG. 12 shows a message flow diagram for resource allocation in W2W coverage;
FIG. 13 shows a message flow diagram for association formation in distributed control;
FIG. 14 shows a message flow diagram for association formation;
FIG. 15 shows a message flow diagram for keep alive message exchanges;
FIG. 16 shows the relationship between the length of the common DRX cycle and the length of the dedicated DRX cycle;
FIG. 17 shows a paging occasion offset;
FIG. 18 shows the downlink channels and the downlink channel mapping for the XL;
FIG. 19 shows the uplink channels and the uplink channel mapping for the XL;
FIG. 20 shows a frame structure for the physical layer of the XL; and
FIG. 21 shows physical channel multiplexing for subframes.

### DETAILED DESCRIPTION

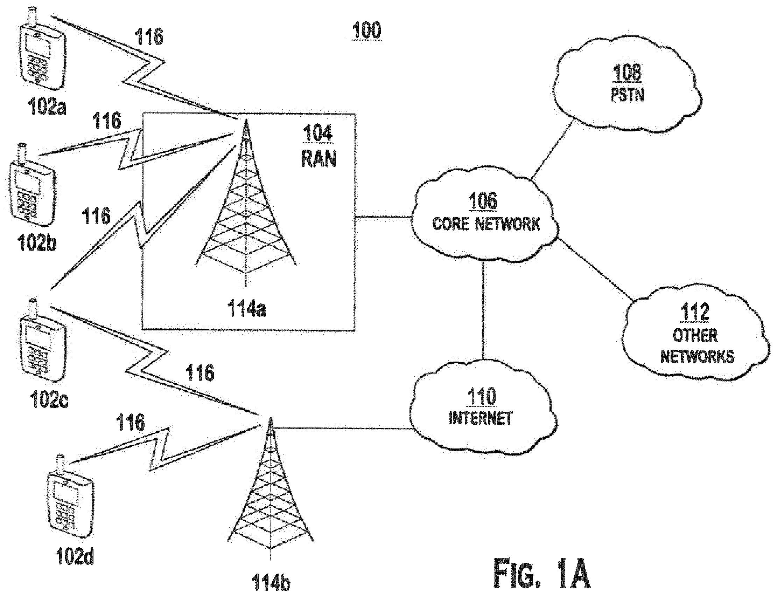

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

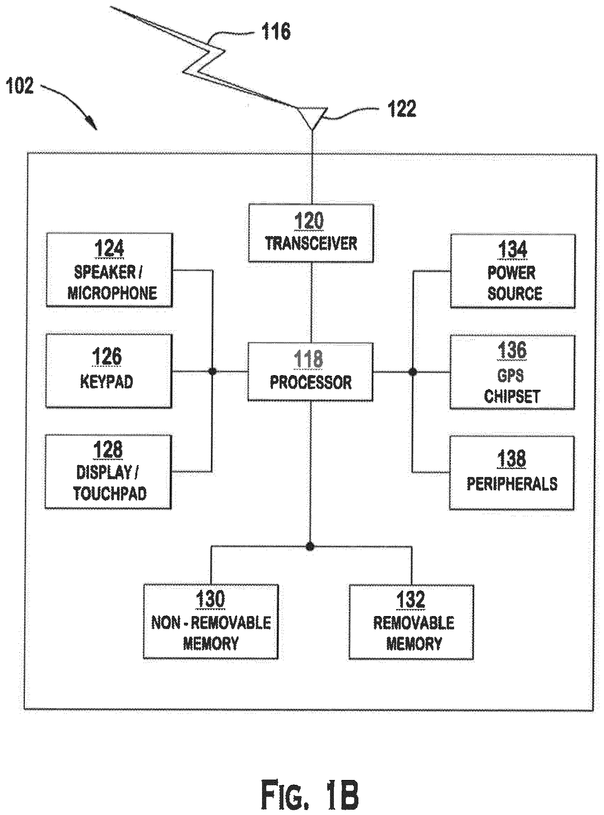

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

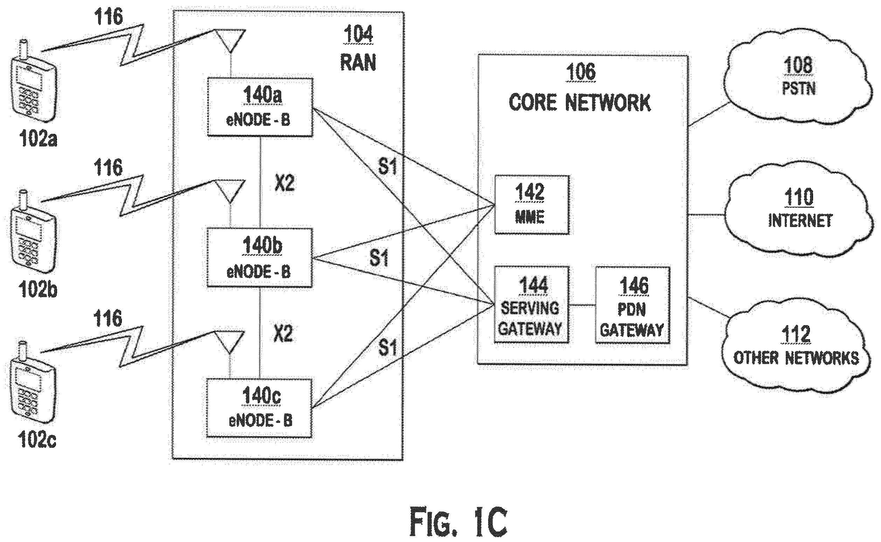

FIG. 1C is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 140a, 140b, 140c, though it will be appreciated that the RAN 104 may include any number of eNode-Bs while remaining consistent with an embodiment. The eNode-Bs 140a, 140b, 140c may each include one or more transceivers for communicating with the WTRUs 102a, 102b, 102c over the air interface 116. In one embodiment, the eNode-Bs 140a, 140b, 140c may implement MIMO technology. Thus, the eNode-B 140a, for example, may use multiple antennas to transmit wireless signals to, and receive wireless signals from, the WTRU 102a.

Each of the eNode-Bs 140a, 140b, 140c may be associated with a particular cell (not shown) and may be configured to handle radio resource management decisions, handover decisions, scheduling of users in the uplink and/or downlink, and the like. As shown in FIG. 1C, the eNode-Bs 140a, 140b, 140c may communicate with one another over an X2 interface.

The core network 106 shown in FIG. 1C may include a mobility management gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNode-Bs 142a, 142b, 142c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

When referred to hereinafter, the term traditional radio link (TRL) refers to the air interface 116 between a WTRU 102 and the RAN 104, whereby the air interface 116 is not aided by another WTRU acting as relay between the WTRU 102 and the RAN 104. The TRL may be in accordance with any radio technology such as, E-UTRA, UTRA, any one of the IEEE 802 protocols, CDMA 2000, GSM, and the like. For example, the TRL may be an LTE, LTE-A, or WCDMA air interface.

A WTRU 102 may lack network coverage and may not have an established TRL with the RAN 104. The WTRU 102 may establish a radio link with another WTRU, for example, the other WTRU may be in the WTRU's 102 vicinity. The WTRU may receive access to the RAN 104 via the other WTRU's established TRL with the RAN 104. Further, the WTRU 102 may have a TRL established with the RAN 104 but may require additional communication capacity and may establish a radio link with the other WTRU in order to receive additional access to the RAN 104 via the other WTRU's established TRL. Furthermore, the WTRU 102 may establish a radio link with the other WTRU to communicate directly with the other WTRU without utilizing the TRL resources of either WTRU.

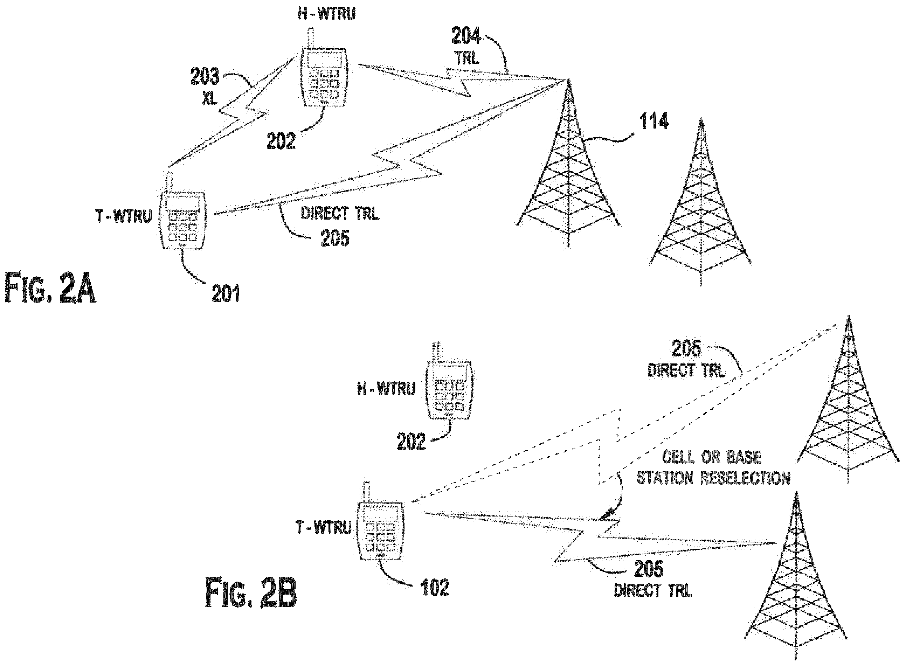

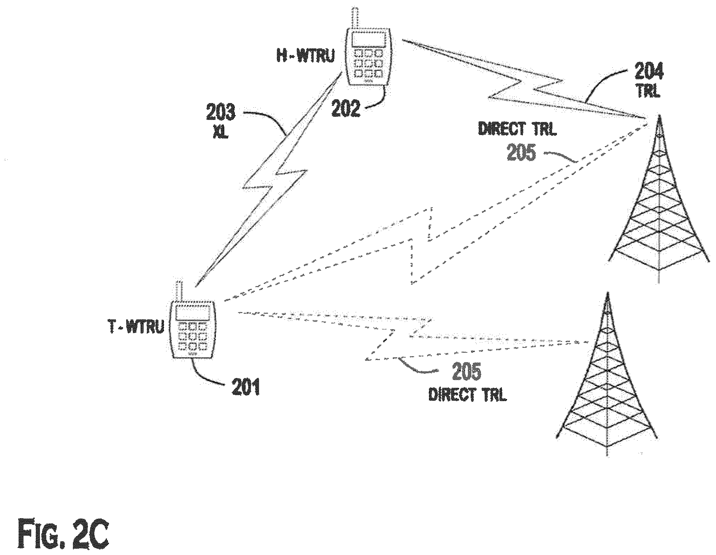

The radio link between the WTRU 102 and the other WTRU is referred to herein as a cross link (XL). Further, when the WTRU 102 has an established XL with the other WTRU, the WTRU 102 is referred to herein as a terminal-WTRU (T-WTRU) and the other WTRU is referred to herein as a helper WTRU (H-WTRU) as described with reference to FIG. 2.

FIG. 2A shows a T-WTRU having a XL with a H-WTRU. The T-WTRU 201 has a XL 203 with the H-WTRU 202. The H-WTRU 202 has a TRL 204 with a base station 114, which may be any one of base stations 114a, 114b. The XL 203 may facilitate access to the TRL 204 for the T-WTRU 201 or may facilitate direct communication between the T-WTRU 201 and the H-WTRU 202. Further, the T-WTRU 201 may have a direct TRL 205 with the base station 114 as shown in FIG. 2. When the T-WTRU has both the XL 203 and the direct TRL 205, increased throughput and capacity are achieved for the T-WTRU 201 through the utilization of both links.

The XL 203 may also be used in a wireless network to provide coverage for an out-of-coverage T-WTRU 201, i.e., a T-WTRU 201 without a direct TRL 205 to the base station 114, by utilizing the TRL 204 of a network-covered H-WTRU 202 to relay the H-WTRU 202 traffic to the base station 114 and the RAN 104.

For example, in LTE systems, a T-WTRU 201 has coverage if the T-WTRU 201 is registered with a network, (i.e., in an evolved packet system (EPS) mobility management (EMM) REGISTERED state), is able to decode a broadcast channel (BCH) from a cell in the network, is able to receive primary system information, is able to decode a paging channel (PCH), is able to receive paging messages and secondary system information, is able to communicate with cell using random access in the RRC-IDLE state or using a physical uplink control channel (PUCCH) or a physical uplink shared channel (PUSCH) in the RRC-CONNECTED state, and is able to transmit a minimum data rate over the PUSCH and receive a minimum data rate over the physical downlink shared channel (PDSCH).

Before XL 203 establishment, a WTRU 102 may attempt to reselect a cell or base station for direct TRL 205 establishment. When a direct TRL 205 is established, the WTRU 102 may use the direct TRL 205 for its traffic and, thus, not burden the H-WTRU's 202 TRL 204.

FIG. 2B shows cell or base station reselection for direct TRL 205 establishment. The T-WTRU 102 is unable to establish a direct TRL 205 with the base station 114 or the direct TRL 205 with the base station 114 has failed (as depicted by the dashed line in FIG. 2B). The T-WTRU 201 then attempts cell or base station reselection and the direct TRL 205 is established with the reselected cell or base station (as depicted by the solid line). The T-WTRU 201 may not need to establish a XL 203 with the H-WTRU 202 and the WTRU 102 may not be designated as a T-WTRU 201. It is noted that the reselected cell may be associated with the same base station 114 or a different base station as depicted in FIG. 2B.

FIG. 2C shows XL 203 establishment based on TRL 204 establishment failure. A direct TRL 205 is not established with either the base station or the reselected base station or the direct TRL 205 has failed (as depicted by the dashed line). In order to utilize the communication resources of the RAN 114, the T-WTRU 201 has an established XL 203 with the H-WTRU 202, which has a TRL 204 with the base station 114.

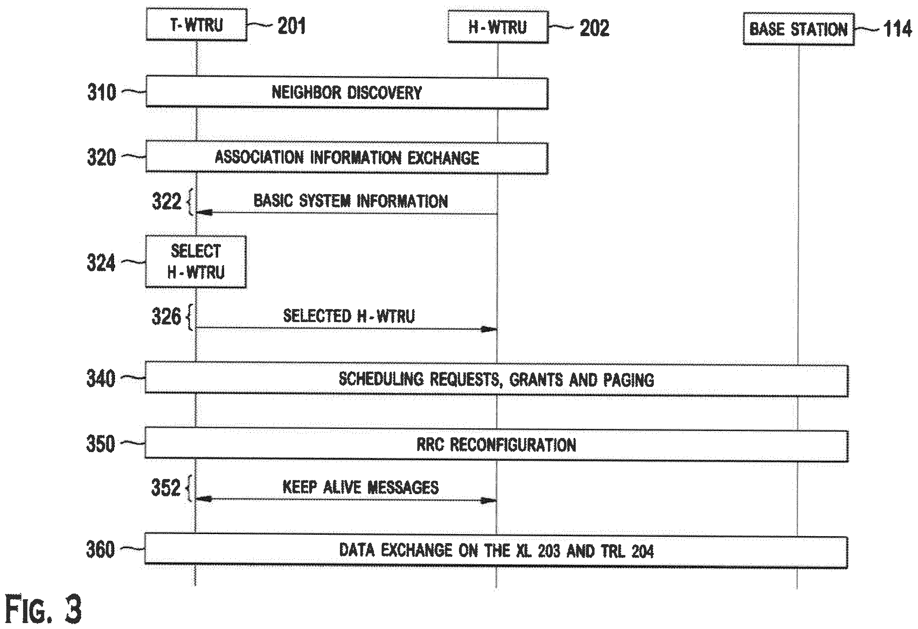

Procedures may be used for XL 203 establishment between the T-WTRU 201 and the H-WTRU 202. The procedures may include neighbor discovery, H-WTRU selection, or association information exchange as described with reference to FIG. 3.

FIG. 3 shows a XL 203 establishment procedure. The T-WTRU 201 performs neighbor discovery 310 in order to locate a H-WTRU 202. In neighbor discovery, the T-WTRU 201 may transmit a neighbor discovery initiation transmission (NDIT) and await a neighbor discovery response transmission (NDRT) from the H-WTRU 202. Neighbor discovery 310 is used by the T-WTRU 201 for finding a WTRU 102 for serving as a H-WTRU 202. The NDIT may be transmitted in a common resource and as such may be received by a plurality of WTRUs 102 and the plurality of WTRUs 102 may then transmit the NDRT, which provides the T-WTRU 201 options for selecting a H-WTRU 202.

After neighbor discovery, association information is exchanged 320, whereby the T-WTRU 201 and the H-WTRU 202 may exchange association information messages. The T-WTRU 201 also receives basic system information 322 from the H-WTRU 202, which may include identities associated with the H-WTRU 202. The T-WTRU 201 then selects the H-WTRU 202, for example, from candidate WTRUs 102 with which the T-WTRU 201 exchanged association information 320 or received basic system information 322. After the H-WTRU 202 is selected, the T-WTRU 201 sends a selected as H-WTRU 202 message 326 to the H-WTRU 202 indicating the H-WTRU 202 selection for the role.

At any point during or after association information exchange 320, receipt of basic system information 322, H-WTRU 202 selection 324, or transmission or reception of the selected as H-WTRU 202 message 326, association between the T-WTRU 201 and the H-WTRU 202 may be formed. Further, although not shown in FIG. 3, the base station 114 may be involved in procedures described with reference to numerals 310-326.

After association is formed, scheduling requests, grants for the XL 203, and paging messages are exchanges between the T-WTRU 201, the H-WTRU 202, and the base station 114. The scheduling requests may indicate a need for resource allocation on the XL 203 for the transmission of data. XL 203 grants may allocate resources on the XL 203 for the T-WTRU 201 or the H-WTRU 202 to use for uplink or downlink communication. Further, paging may be performed to send alerts or indicate a need for a T-WTRU 201 or H-WTRU 202 to undergo an RRC state transition as described herein.

Further, RRC reconfiguration 350 may be performed in order to setup the connectivity of T-WTRU 201 or the H-WTRU 202 on the XL 203 or the TRL 204. RRC reconfiguration 350 may also be used to indicate mapping between signaling radio bearers (SRBs) or data radio bearers (DRBs) for the TRL 204 and SRBs or DRBs for the XL 203. Keep alive messages are exchanged 352 between the T-WTRU 201 and the H-WTRU 202 in order to maintain the association between the T-WTRU 201 and the H-WTRU 202. Further, data is exchanged 360 on the XL 203 and the TRL 204 to provide service and coverage to the T-WTRU 201.

The T-WTRU 201 and the H-WTRU 202 may immediately perform data transmission 325 on the XL 203. If the T-WTRU 201 and the H-WTRU 202 do not need to perform data transmission 325, the T-WTRU 201 and the H-WTRU 202 may exchange keep alive messages 324 in order to maintain the established XL 203 and facilitate using the XL 203 for data transmission 325 at a later time.

XL 203 establishment and communication over the XL 203 may be performed in accordance with any air interface, such as an LTE or LTE-A air interface and procedures for XL 203 establishment or communication using the XL 203 may be performed in accordance with procedures for the air interface and in conjunction with the procedures described herein.

The XL 203 between the T-WTRU 201 and the H-WTRU 202 may be in accordance with an Open Systems Interconnection (OSI) protocol comprising one or more of a physical (PHY), medium access control (MAC), radio link control (RLC), packet data convergence protocol (PDCP), radio resource control (RRC), or non-access stratum (NAS) layer. The protocol layers of the XL 203 may be different than the protocol layers of the TRL 204 or the direct TRL 205, or may be the same. For example, the PHY layer of the XL 203 may be different than the PHY of the TRL 204, whereas the RRC layers of the XL 203 and TRL 204 may be similarly defined.

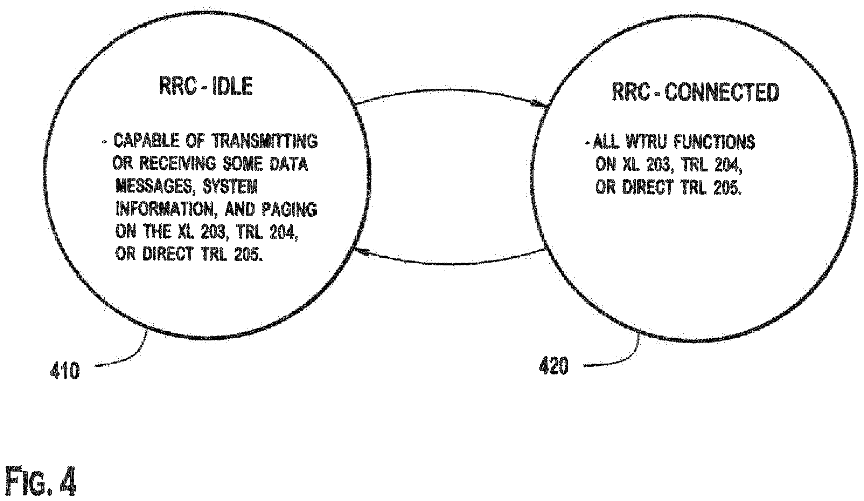

For the RRC layer, an RRC protocol may be used. The RRC protocol may include RRC states to which a WTRU 102, for example, the T-WTRU 201 or the H-WTRU 202, may belong. An RRC state of the WTRU 102 is dictated by the WTRU's 102 connectivity or potential for connectivity and the WTRU 102 may transition between the RRC states based on the WTRU's 102 connectivity or potential for connectivity. The RRC states are associated with the WTRU's 102 connectivity on any radio link, including, the XL203, TRL 204, or direct TRL 205 as described with reference to FIG. 4

FIG. 4 shows the RRC states of a WTRU 102. The WTRU 102 may be in an RRC-IDLE state 410 or an RRC-CONNECTED state 420. The WTRU 102 may transition between the RRC-IDLE state 410 and the RRC-CONNECTED state 420. When the WTRU 102 is in the RRC-IDLE state 410, the WTRU 102 may not have a signaling radio bearer established on the XL 203, the TRL 204 or the direct TRL 205. In the RRC-IDLE state 410, the WTRU 102 may transmit and receive certain messages, such as system information or paging, on the XL 203, the TRL 204 or the direct TRL 205. Further, the WTRU 102 may transmit some data before transitioning to the RRC-CONNECTED state 420. When the WTRU 102 is in the RRC-CONNECTED state 420, the WTRU 102 is able to perform its full functions including transmitting user data.

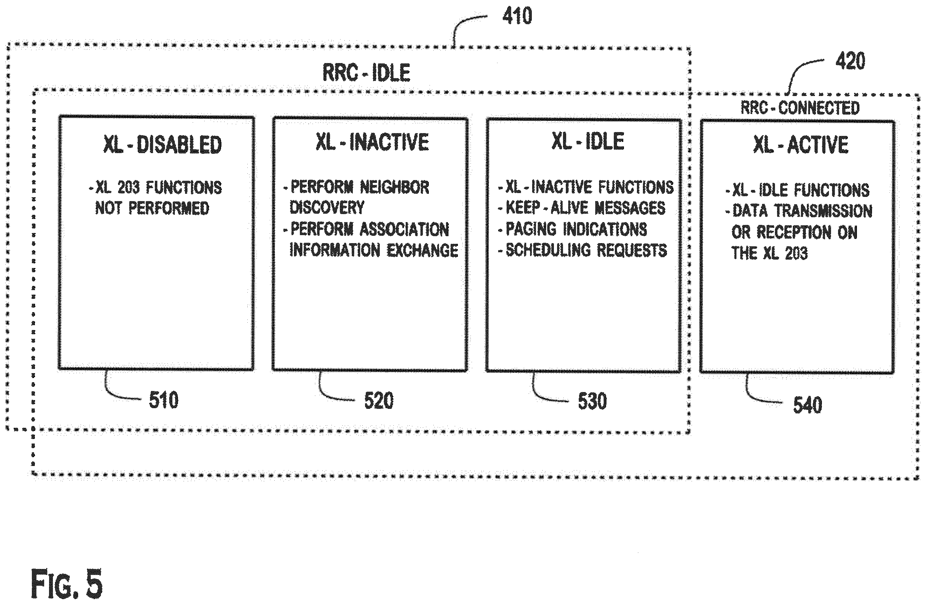

A WTRU 102 that is capable of performing functions associated with the XL 203 may further have an XL substate associated with the functions the WTRU 102 is capable of performing on the XL 203. The XL substate is independent of the functions the WTRU 102 is capable of performing on either the TRL 204, or the direct TRL 205, and is only associated with the functions the WTRU 102 is capable of performing on the XL 203. The XL substate is a substate of the RRC state (i.e., the RRC-IDLE state 410 and RRC-CONNECTED state 420). The WTRU 102 may have any one of four XL substates as described with reference to FIG. 5.

FIG. 5 shows the RRC substates of a WTRU 102. The WTRU 102 may be in an XL-Disabled substate 510, XL-Inactive substate 520, XL-Idle substate 530, or XL-Active substate 540. The WTRU 102 may be in any one of the four substates 510-540 when the WTRU 102 is in the RRC-CONNECTED state 420. When the WTRU is in the RRC-IDLE state 410, on the other hand, the WTRU 102 may be in the XL-Disabled substate 510, XL-Inactive substate 520, or XL-Idle substate 530, but not in the XL-Active substate 540.

A WTRU 102 in the XL-Disabled substate 510 does not perform functions associated with the XL 203. For example, the WTRU 102 may not be capable of performing functions associated with the XL 203, or may be capable of performing the function but may be configured to have the functions disabled. Because the WTRU 102 may still be able to perform functions on the TRL 204, or the direct TRL 205, the WTRU 102 may be in an RRC-IDLE state 410 or an RRC-CONNECTED substate 420.

A WTRU 102 in the XL-Inactive substate 520 may perform neighbor discovery, association information exchange (e.g., transmitting or receiving association information messages), transmission or reception of a selected as H-WTRU 202 message, or basic system information but may not be capable of transmitting or receiving keep alive message or transmitting or receiving data on the XL 203.

A WTRU 102 in the XL-Idle substate 530 may perform all the functions the WTRU 102 may perform in the XL-Inactive substate 520 in addition to transmitting or receiving keep alive messages, paging indications, and scheduling requests, as will be described in further detail herein. A T-WTRU 201 in the XL-Idle substate 530 may have formed association with a H-WTRU 202 but may not be transmitting or receiving user communication data.

A WTRU 102 in the XL-Active substate 540 may perform all functions associated with the XL 203, including transmitting or receiving data on the XL 203. A WTRU 102 may transition between the RRC states 410-420 and the XL substates 510-540.

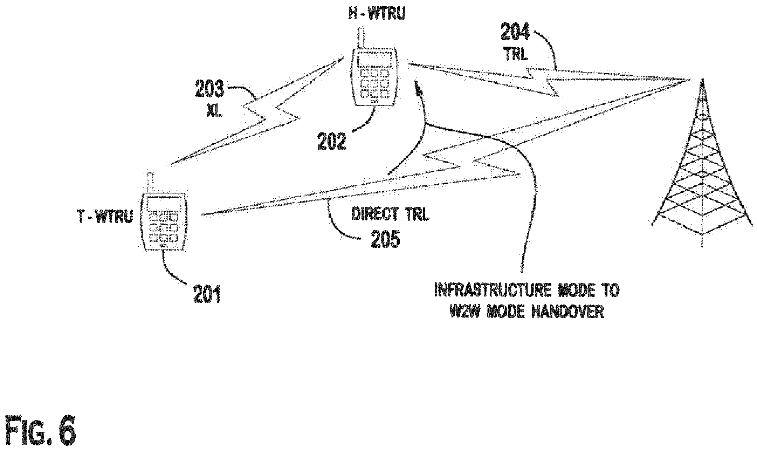

A T-WTRU 201 having only an established XL 203 with a H-WTRU 202 may be said to be in WTRU-to-WTRU (W2W) coverage mode. Further, a T-WTRU 201 having a direct TRL 205 with the base station 114 may be said to be in network coverage mode or infrastructure coverage mode. A T-WTRU 201 may transition between the W2W coverage mode and the infrastructure coverage mode through handover between the two modes as described with reference to FIG. 6.

FIG. 6 shows handover from infrastructure coverage mode to W2W coverage mode. The T-WTRU 201 has a direct TRL 205 with the base station 114 and is, thus, in infrastructure coverage mode. A handover may occur from the infrastructure coverage mode to W2W coverage mode. After the handover is performed, the T-WTRU 201 has a XL 203 with the H-WTRU 202 and the H-WTRU 202 has a TRL with the base station through which coverage is provided to the T-WTRU 201 in W2W coverage mode. It is noted that FIG. 6 depicts the TRL 204 being associated with the same base station 114 as the direct TRL 205 in what is described herein as intra-base station infrastructure coverage mode to W2W coverage mode handover. Inter-base station infrastructure coverage mode to W2W coverage mode handover will also be described shortly herein

The handover may occur because the T-WTRU 201 is leaving the coverage area of the base station 114. Further, the handover may be triggered by the base station 114 or the T-WTRU 201 based on a measurement of a link quality or a signal strength associated with the direct TRL 205. For example, if the base station 114 determines that the direct TRL 205 is at risk of being lost or disconnected, the base station 114 may trigger the handover to W2W coverage mode.

A T-WTRU 201 may lose or be outside of network coverage for a limited period of time and retain partial synchronization with a base station in a fly wheel scenario. Alternatively, the T-WTRU 201 may be out of coverage for a longer period of time and may not be time-synchronized with any base station. In XL 203 establishment and handovers between W2W coverage and infrastructure coverage, distributed control may be utilized. In distributed control, a T-WTRU 201 exerts control in selecting a H-WTRU 202 and H-WTRU 202, on the other hand, responds to the T-WTRU 201 (for example, neighbor discovery by the T-WTRU 201) on a condition that the H-WTRU 202 meets a criteria set by the network. In distributed control, the network may retain some control in selecting the H-WTRU 202.

Alternatively, control may be centralized, whereby complete control is retained by the network and performed via layer 2 (L2) or layer 3 (L3) signaling. It is noted that distributed control allows for reduced L2 or L3 signaling overhead by the network due to the face that certain control functionalities are exerted by the T-WTRU 201 and the H-WTRU 202.

Initiating W2W coverage mode or handover from infrastructure coverage mode to W2W coverage mode may be triggered based an outcome of cell selection or reselection performed by the T-WTRU 201. W2W coverage mode policy or T-WTRU 201 rules may dictate when W2W coverage is sought or when a handover between infrastructure coverage and W2W coverage is performed. For example, when a T-WTRU 201 receiving coverage using the W2W coverage mode transitions from the RRC-CONNECTED state 420 to the RRC-ILDE mode 410, the T-WTRU 201 may perform cell selection or reselection in order to find a cell and if a cell is not found W2W coverage may be triggered.

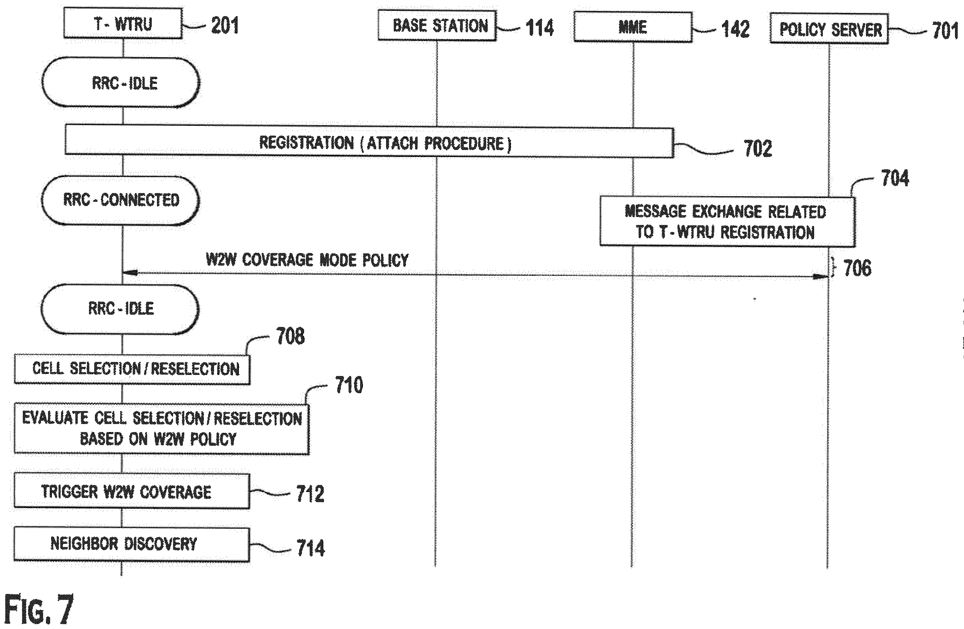

FIG. 7 shows a message flow diagram for triggering W2W coverage. The T-WTRU 201 is initially in the RRC-IDLE state 410. The T-WTRU 201 performs registration with the base station 112 or the MME 142 702 and transitions to the RRC-CONNECTED state 420. After the registration 702, the MME 142 and a policy server 701 exchange messages related to the registration of the T-WTRU 201 704. Further, the T-WTRU 201 may be provided with a default radio access bearer (RAB) and a globally unique temporary identity (GUTI). In addition, an evolved packet system authentication and key agreement (EPS AKA) may be executed and NAS or RRC security may be activated.

W2W coverage mode policy for push or pull is then exchanged between the policy server and the T-WTRU 201 706. If the T-WTRU 201 does not have a need to be in the RRC-CONNECTED state 420, (for example, the T-WTRU 201 does not have user data for transmission), the T-WTRU 201 transitions to the RRC-IDLE state 410. When in the RRC-IDLE state 410, the T-WTRU 201 performs cell selection or reselection 708. The T-WTRU 201 also evaluates cell selection or reselection based on W2W policy 710. In evaluating the cell selection or reselection, the T-WTRU 201 may determine that a suitable cell is not found without roaming, a suitable cell is not found with roaming, an acceptable cell is not found, a suitable cell is not found on other RATs, or an acceptable cell is not found on other RATs. Further, the determination may be made based on closed subscriber group (CSG) cells.

The evaluation of the cell selection or reselection may be based on T-WTRU 201 or network policy. For example, T-WTRU 201 policy may call for triggering W2W coverage mode when a suitable cell is not found on a particular public land mobile network (PLMN) or RAT. T-WTRU 201 policy may be static or dynamic and may be pushed to the T-WTRU 201 or pulled by the T-WTRU 201.

The T-WTRU 201 then triggers W2W coverage 712 based on the evaluation of the cell selection or reselection and W2W coverage. After W2W coverage is triggered 712, neighbor discovery 714 is performed.

As described herein cell selection or reselection may be performed in accordance with an LTE air interface of the direct TRL 205. Further, cell selection or reselection may incorporate intra-frequency, inter- frequency or inter-RAT selection. Cell selection or reselection may also be based W2W policy.

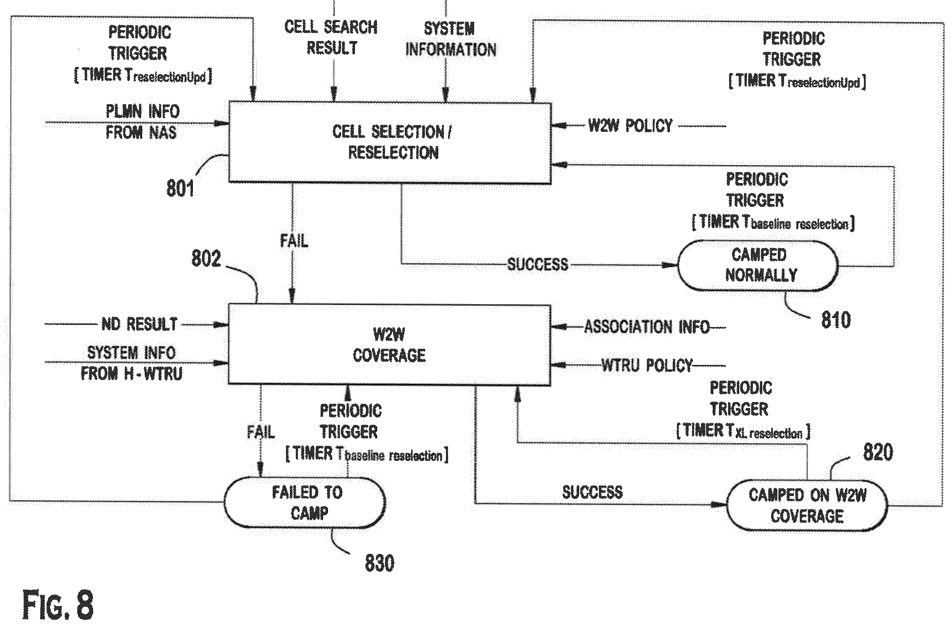

FIG. 8 shows a state diagram of cell selection or reselection and triggering W2W coverage. Cell selection or reselection 801 may be successful, whereby a cell is found in order to establish a direct TRL and have infrastructure coverage. Alternatively, cell selection or reselection 801 may be fail, whereby infrastructure coverage is determined not to be available and W2W coverage 802 is triggered. The outcome of cell selection or reselection 801 may is determined based on cell search results, system information related to cell selection or reselection, PLMN information, (e.g., received from the NAS and including any barred cell information), or W2W policy.

If the T-WTRU 201 finds a suitable cell, cell selection or reselection is successful and the T-WTRU 201 transitions to a Camped Normally state 810. The T-WTRU 201 remains in the Camped Normally state 810 if the cell remains suitable. The T-WTRU 201 may determine periodically, for example, as based on a timer (referred to herein a T_{reselection} timer), if the cell on which the T-WTRU 201 is camped remains suitable.

If, on the other hand, the T-WTRU 201 only finds an acceptable cell, the T-WTRU 201 transitions to a Camped on any cell state (not shown in FIG. 8). When the T-WTRU 201 is in the Camped on any cell state, cell selection or reselection may be triggered periodically based on a timer, (for example, T_{reselection}).

If the cell selection or reselection fails and a suitable cell is not found, W2W coverage mode is triggered. Further, cell selection or reselection 801 may be based on W2W policy, whereby triggering W2W coverage mode may be based on neighbor discovery, association information, system information, and W2W policy.

If the T-WTRU 201 is successful in finding a suitable H-WTRU 202 and if the T-WTRU 201 is authorized to use the H-WTRU 202 for W2W coverage, the T-WTRU 201 transitions to a camped on W2W coverage state 820. The T-WTRU 201 may periodically check the W2W coverage and the association with the H-WTRU 202, for example, based on a time (referred to herein as T_{XLreselection}). The T_{XLreselection} timer may be also be used to trigger neighbor discovery. The T_{XLreselection} timer may be set to synchronous with the length of a DRX cycle of the T-WTRU 201 or H-WTRU 202 in W2W coverage mode.

While in the Camped on W2W coverage state 820, the T-WTRU 201 may periodically check if infrastructure coverage is available or trigger cell selection or reselection based on a timer (the timer is referred to herein as the T_{reselectionUpd} timer).

If cell selection or reselection indicates that a suitable or acceptable cell is found, the T-WTRU 201 the T-WTRU 201 leaves the W2W coverage mode and transitions to the Camped Normally state 810 or the Camped on Any Cell state, respectively. The T-WTRU 201 may remain in the Camped on W2W coverage state 820 on a condition that it has not moved into a coverage area of a cell or on a condition that a network-approved H-WTRU 202 is available.

Cell selection or reselection may be delayed or postponed when the T-WTRU 201 is in a coverage hole (i.e., infrastructure coverage mode is not available) and is only receiving network services via the W2W coverage mode. Postponing cell selection or reselection may conserve battery power of the T-WTRU 201. When postponing cell selection or reselection, T_{reselectionUpd} may be greater than T_{reselection}.

If the T-WTRU 201 is unable to find a H-WTRU 202, the T-WTRU 201 may transition to the Failed to camp state 830. In the Failed to camp state 830, the T-WTRU 201 periodically determines whether a H-WTRU 202 is found, for example, based on the T_{baseline-reselection} timer. The T-WTRU 201 also periodically performs cell selection or reselection, for example, based on the Timer T_{reselectionUpd} timer. The T-WTRU 201 remains in the Failed to camp state 830 if a H-WTRU 202, a suitable cell, or an acceptable cell is not found. It is noted that the T_{reselection} may be set to match an RRC-IDLE state 410 DRX cycle length or in accordance with the DRX cycle length.

As described herein, in order for the T-WTRU to receive coverage in the W2W mode, neighbor discovery is triggered. In neighbor discovery, the T-WTRU 201 seeks a H-WTRU 202 through which the T-WTRU 201 may receive network services. In neighbor discovery, the T-WTRU 201 transmits an NDIT to all WTRUs capable or receiving the NDIT (i.e., all WTRUs in the T-WTRU's vicinity) on preconfigured resources and awaits receipt of an NDRT from a WTRU that may become a H-WTRU 202.

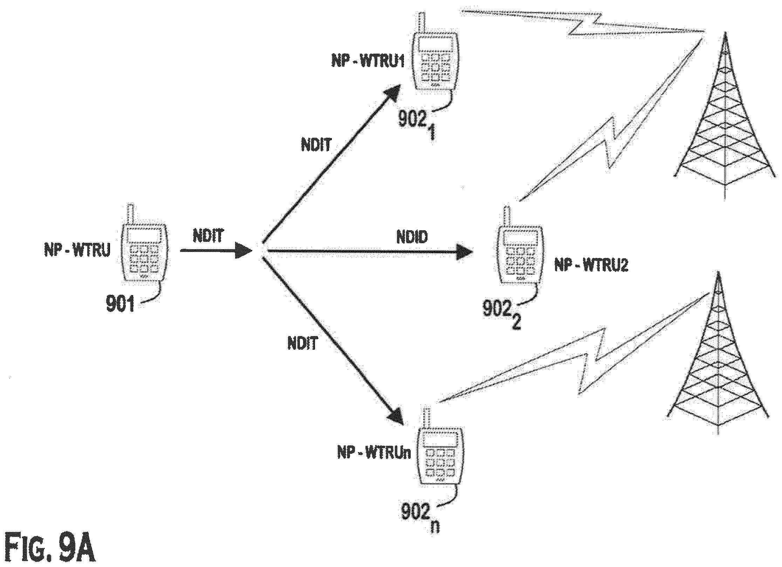

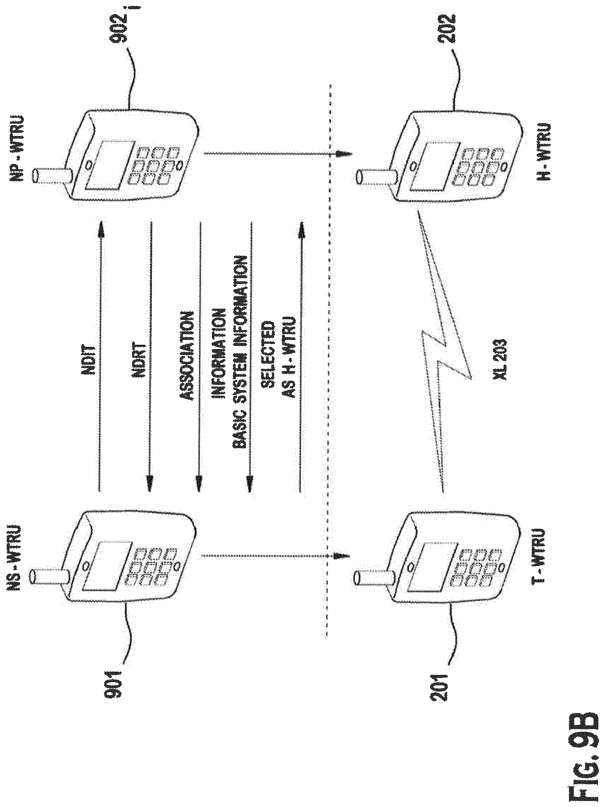

Before the T-WTRU 201 selects the H-WTRU 202, the T-WTRU 201 may be referred herein as a neighbor seeking WTRU (NP-WTRU), and the H-WTRU 202 may be referred herein as a neighbor present WTRU (NP-WTRU) as described with reference to FIGs. 9A and 9B.

FIGs. 9A and 9B show neighbor discovery by a NS-WTRU. The T-WTRU 201, as an NS-WTRU 901 initiates neighbor discovery and transmits a NDIT. The NDIT is received by a plurality of NP-WTRUs 902_{1-N} (singularly referred to herein after as NP-WTRUs 902ᵢ and collectively referred to hereinafter as NP-WTRUs 902). The NP-WTRUs 902 may each be associated with different base stations (as shown in FIG. 9A, where NP-WTRU1 902₁ and NP-WTRU2 902₂ are associated with one base station and NP-WTRUn 902ₙ is associated with another base station).

As shown in FIG. 9B, an NP-WTRU 902ᵢ responds to the NDIT with an NDRT to the NS-WTRU 901. Then association information is exchanged between the NS-WTRU 901 and the NP-WTRU 902ᵢ, and the NP-WTRU 902ᵢ sends basic system information to the NS-WTRU 901. The NS-WTRU 901 selects the NP-WTRU 902ᵢ as a H-WTRU 202 and the NP-WTRU 902ᵢ becomes the H-WTRU 202, while the NS-WTRU 901 becomes the T-WTRU 201. It is noted that for ease of description NS-WTRU 901 is interchanged with T-WTRU 201 herein, as is NP-WTRU 902ᵢ with H-WTRU 202.

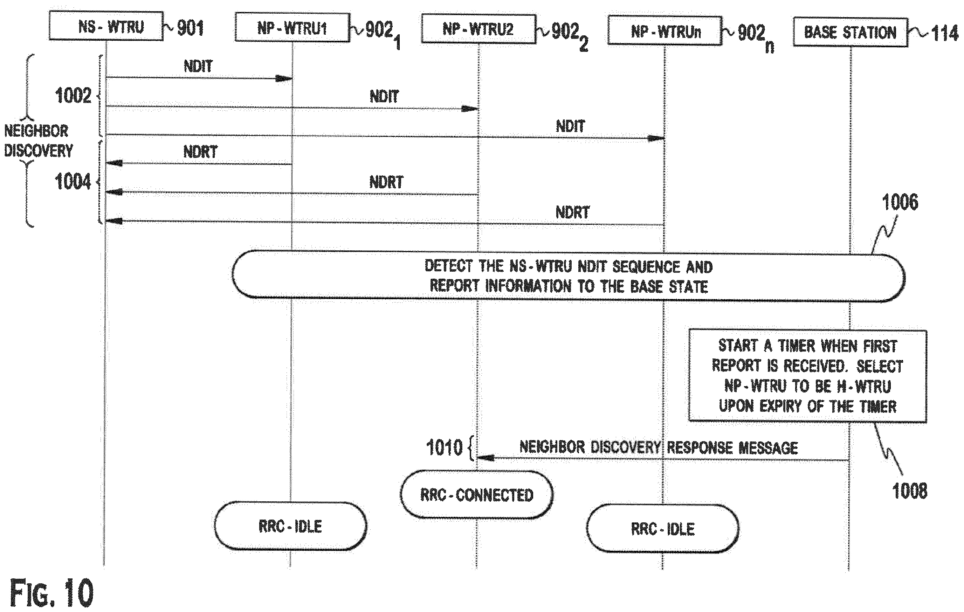

FIG. 10 shows a message flow diagram for reporting neighbor discovery to a network in centralized H-WTRU selection. The NS-WTRU 901 may select a neighbor discovery temporary identifier, (for example, randomly or based on digits of an International Mobile Subscriber Identity (IMSI)), transmit a NDIT 1002. NP-WTRUs 902 (shown as NP-WTRU1 902₁, NP-WTRU2 902₂, ..., NP-WTRUn 902ₙ) receive the NDIT the NS-WTRU 901 and send a NDRT 1004 to the NS-WTRU 901. The NP-WTRUs 902 may in the RRC-CONNECTED state 420 or awake during DRX in the RRC-IDLE state 410.

The NP-WTRUs 902 may detect an NS-WTRU's 901 identifier based on the NDIT and report receipt of the NDIT from the NS-WTRU 901 to the base station 114 1008, for example, by transmitting a first message to the base station 114. The NP-WTRUs may further report parameters related to a suitability index based on the NP-WTRUs' 902 battery level and the like. The suitability index may be based on real-time data, including, XL 203 conditions, mobility, TRL 204 conditions, battery status, hardware limitations, user subscription level or willingness to act as a H-WTRU 202. The suitability index may also be based on whether a NP-WTRU 902ᵢ is a H-WTRU for the XL of another T-WTRU.

The When the base station 114 receives a report from a NP-WTRU 902ᵢ indicating a NDIT from the NS-WTRU 901, the base station 114 starts a timer and waits for potential reports from other NP-WTRUs which have received the NDIT from the NS-WTRU 901. It is noted that the report received from the NP-WTRU 902ᵢ may be associated with a unique NDIT sequence.

Upon expiration of the timer, the base station selects a NP-WTRU 902ᵢ to be a H-WTRU 202 and sends an RRC message, referred to herein as a neighbor discovery response message 1010, to indicate to the NP-WTRU 902ᵢ that it is chosen or selected for the H-WTRU 202 role. In FIG. 10, NP-WTRU2 902₂ is shown as being chosen or selected and remains in the RRC-CONNECTED state 420 due to its selection. Unselected NP-WTRUs, such as NP-WTRU1 902₁, transition to the RRC-IDLE state 410 if they do not have communication activity of their own or are not subject to neighbor discovery.

As previously described, the NP-WTRUs 902 may be associated with different base stations or different cells, for example, at cell edge. When the NP-WTRUs 902 belong to different cells, each cell may select a different NP-WTRU to become the H-WTRU 202 (for example, different cells sending more than one neighbor discovery response message 1010 to more than one NP-WTRU 902), thus, resulting in a conflict. If the different cells are serviced by the same base station 114, the base station 114 may coordinate selection of a NP-WTRU by sending only one RRC XL trigger message to one NP-WTRU, as described herein. The NP-WTRU receiving the RRC XL trigger is selected as a H-WTRU 202.

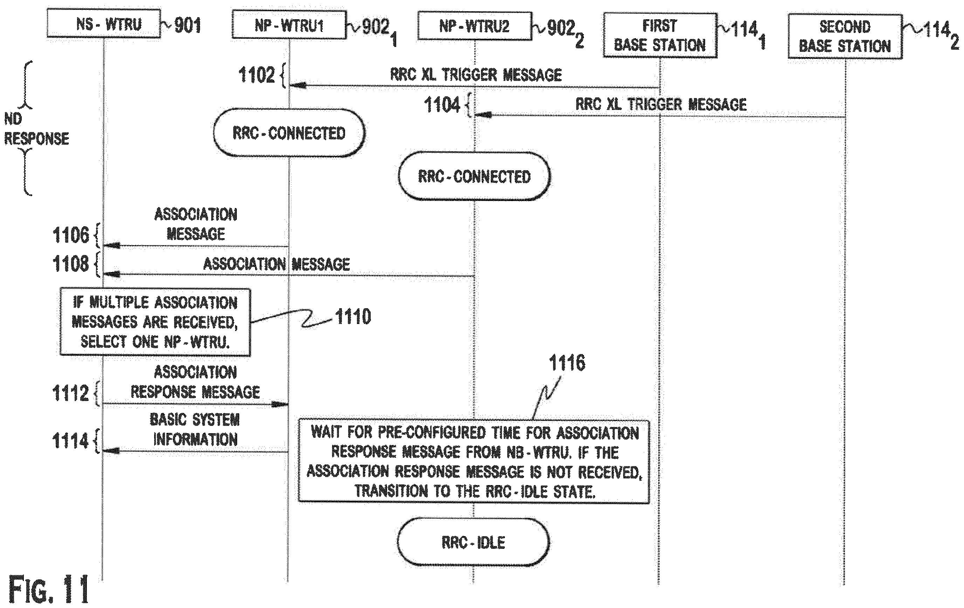

FIG. 11 shows a message flow diagram for H-WTRU selection. NP-WTRU1 902₁ is serviced by a first base station and NP-WTRU2 902₂ is serviced by a second base station. Following neighbor discovery, the first base station sends an RRC XL trigger message to the NP-WTRU1 902₁ 1102 and the second base station sends an RRC XL trigger message to the NP-WTRU2 902₂ 1104. Both NP-WTRU1 902₁ and NP-WTRU2 902₂ begin performing association formation with the NS-WTRU 901 and the NS-WTRU 901 receives an association message from the NP-WTRU1 902ᵢ 1106 and an association message from the NP-WTRU2 902₂ 1108. Each association message may include an identity of the NP-WTRU 902ᵢ that sent the message.

The NP-WTRU 901 selects one NP-WTRU 902ᵢ from the plurality of NP-WTRUs 902 from which it received an association response message 1110 and sends an association response message to the selected NP-WTRU 902ᵢ 1112. In FIG. 11, NP-WTRU1 902₁ is selected. The NS-WTRU 901 may select the NP-WTRU 902ᵢ based on a criteria, such as a received signal strength or a relative received signal strength of a received NDRT or association message. For example, the NS-WTRU 901 may select the NP-WTRU 902ᵢ from which it received an NDRT or association message having the highest signal strength. The selected NP-WTRU 902ᵢ then sends basic system information to the NS-WTRU 901 1114.

An unselected NP-WTRU, such NP-WTRU2 902₂ may await the association response message for a period of time, and if the association response message is not received, the unselected NP-WTRU may transition to the RRC-IDLE state 410 1116. The unselected NP-WTRU may not be required to alert its associated base station. Further, the first base station or the second base station may determine that the unselected NP-WTRU is not required for XL 203 establishment and may remove records of the association from its database.

Multiple iterations of association messages and association response messages may be performed to ensure resilience. Further, pre-configured timers and counters may be used to guarantee that association messages and association response messages are received correctly.

A NP-WTRU 902ᵢ (for example, that is not in DRX in the RRC-IDLE state 410) may respond with an NDRT on a condition that criteria is met. The criteria may be configured by the network and may be a part of W2W policy or XL configuration. Further, the criteria may include a suitability index that is based on battery status or life, the RRC state of the NP-WTRU 902ᵢ, the NP-WTRU's 902ᵢ hardware capabilities, the signal strength of the NDIT, TRL 204 quality, or NP-WTRU 902ᵢ mobility. The NP-WTRU 902ᵢ may use the criteria or a pre-defined algorithm to classify the NP-WTRU 902ᵢ based on a current status and may be configured to transmit a suitability classification in the NDRT.

After transmitting the NDIT, the NS-WTRU 901 may wait for a preconfigured period of time in order to receive NDRTs from a maximum number of NP-WTRUs 902. The NS-WTRU may select a NP-WTRU 902ᵢ based on the suitability classification included in the received NDRTs or a signal strength of received NDRTs, and the like.

Alternatively, a NP-WTRU 902ᵢ may retain state information associated with NDIT transmissions received from the NS-WTRU 901. The state information may be retained for a predefined time or for a number of subsequent frames. Further, as described herein, the NP-WTRU 902ᵢ may be configured to transmit the NDRT based on a classified state of the NP-WTRU 902ᵢ or suitability related classification information. As such, a NS-WTRU 901 may transmit a first NDIT and await NDRTs from NP-WTRUs 902. NP-WTRUs 902 that meet a highest level of suitability classification may respond to this first NDIT transmission while other NP-WTRUs may update a state and not respond with an NDRT.

If the NS-WTRU 901 has not receive any NDRTs from the NS-WTRUs 902, then it may determined that none of the NP-WTRUs 902 meet the highest level of suitability classification. The NS-WTRU 901 may transmit a second NDIT and the NP-WTRUs 902 that meet a second level of suitability classification may respond to the second NDIT, for example, based on their state. The procedure may be repeated until all classification levels are accounted for or until the NS-WTRU 901 receives NDRTs from the NP-WTRUs 902. As such, suitability-related classification information may not need to be transmitted as part of the NDRT. It is noted, however, that delays may be encountered if the available NP-WTRUs do not meet higher suitability classifications.

As described herein, after receiving the NDRTs, the NS-WTRU 901 may transmit an association message to the NP-WTRU 902ᵢ that it has selected as a H-WTRU 202 and the selected NP-WTRU may respond with an association response message. In order to limit the time that NP-WTRU 902ᵢ is required to be awake in DRX mode, a timing limitation may be imposed for the time between NDRT transmission and association response message reception by a NP-WTRU 902ᵢ.

It is noted that in centralized control, the direction of the association messages and association response messages are reversed as compared to those of distributed control. Further, resilience (for example, using preconfigured timers or counters) may be incorporated into association message and association response message exchanges by allowing multiple iterations of the messages in order to ensure that the messages are properly received.

Acquisition of basic system information is described herein. When a NP-WTRU 902ᵢ is selected to become the H-WTRU 202, the NP-WTRU 902ᵢ may transmit basic system information to the NS-WTRU 901. The basic system information may be used to by the NS-WTRU 901 to determine whether to camp on the cell that the selected NP-WTRU is camped on (or to which the selected NP-WTRU is connected). The cell that the NS-WTRU 901 camps on may be the same as the cell on which the NP-WTRU 902ᵢ is camped (or connected to). It is noted that system information other than the basic system information is referred to herein as extended system information.

The basic system information may include: a PLMN Identity List, a tracking area code, cell identity associated with the H-WTRU 202, a latest system information value tag, a system frame number (SFN), access class barring information from system information block 1 (SIB 1), or a closed subscriber group (CSG) ID from SIB 1 or SIB 9. Further, the basic system information may also include XL 203 cell selection related information, such as a minimum pathloss threshold required for maintaining T-WTRU 201 to H-WTRU 202 association. In addition, the basic system information may also include XL common radio resource configuration information, such as an unscheduled control zone (UCZ) time and frequency resource information other than basic system information location, whereby UCZ pertaining to basic system information location may be expected to be provided in Universal Subscriber Identity Module (USIM) or Electrically Erasable Programmable Read-Only Memory (EEPROM), and the like.

The XL common radio resource configuration information may also include normal control zone (NCZ) time and frequency resource information for the downlink and the uplink, which may define the dedicated control zones (DCZ) on both the downlink and the uplink. The XL common radio resource configuration information may further include repetition, timer, or power offset information for scheduling request (SR) messages, a power offset for keep alive messages, association messages, or association response messages, or a power offset and hybrid automatic repeat request (HARQ) retransmission count for the selected as H-WTRU message.

The NS-WTRU 901, via its RRC or NAS layer, may check the basic system information and may decide not to camp on a cell. For example, the NS-WTRU 901 may not camp on the cell if the PLMN of the selected NP-WTRU is not a preferred PLMN of the NS-WTRU 901 or based on W2W policy. A cell may be a suitable cell when the selected NP-WTRU's sell identity is in the PLMN of the NAS of the NS-WTRU 901, or when the selected NP-WTRU's cell is part of at least one tracking area (TA) that is on a list of forbidden TAs for roaming. Further, a cell may be suitable when the selected NP-WTRU's cell identity is not prohibited per W2W policy, or when a CSG ID for a CSG cell is in the NS-WTRU's 901 CSG white list.

In the case of an emergency call, a NS-WTRU 901 may associate with a NP-WTRU 902ᵢ even if the NP-WTRU 902ᵢ is not camped on a preferred cell or PLMN. If the cell on which the NP-WTRU 902ᵢ is camped is barred due to cell access restrictions, (for example, based on access class control information), the NS-WTRU 901 may still camp on the cell and verify access class restrictions only when performing RRC connection establishment. Alternatively, the NS-WTRU 901 may not select a NP-WTRU 902ᵢ if access class restriction prevents the selection.

If the NS-WTRU 901 does not seek to associate with the NP-WTRU 902ᵢ due to criteria described herein, the NS-WTRU 901 may trigger association exchange with another NP-WTRU that has responded with a NDRT. The NP-WTRU 902ᵢ may determine that the NP-WTRU 902ᵢ was not selected to be a H-WTRU 202 based on a timer or by observing other association messages between the NP-WTRU 902ᵢ and the selected NP-WTRU.

In a non-emergency case, the NS-WTRU 901 may confirm selection of a NP-WTRU 902ᵢ by sending an RRC selected as H-WTRU message to the NP-WTRU 902ᵢ. If the NS-WTRU 901 is moving into W2W coverage in a TA for the first time, (for example, as determined based on TA identity), the NP-WTRU 902ᵢ may send an update to the network using a TA update message. Further, if the NS-WTRU 901 has informed the network about its selection of W2W coverage mode for a Tacking Area Identifier (TAI), the NS-WTRU 901 forwards its paging and DRX related configuration information as described herein.

Emergency related system information, such as earthquake and tsunami warning service (ETWS) from SIB 10/11, Commercial Mobile Alert System (CMAS) information from SIB 12, and the like, may be relayed to the T-WTRU 201 from the H-WTRU 202 in the RRC-IDLE state 410 from the base station when a notification is sought or as part of basic system information.

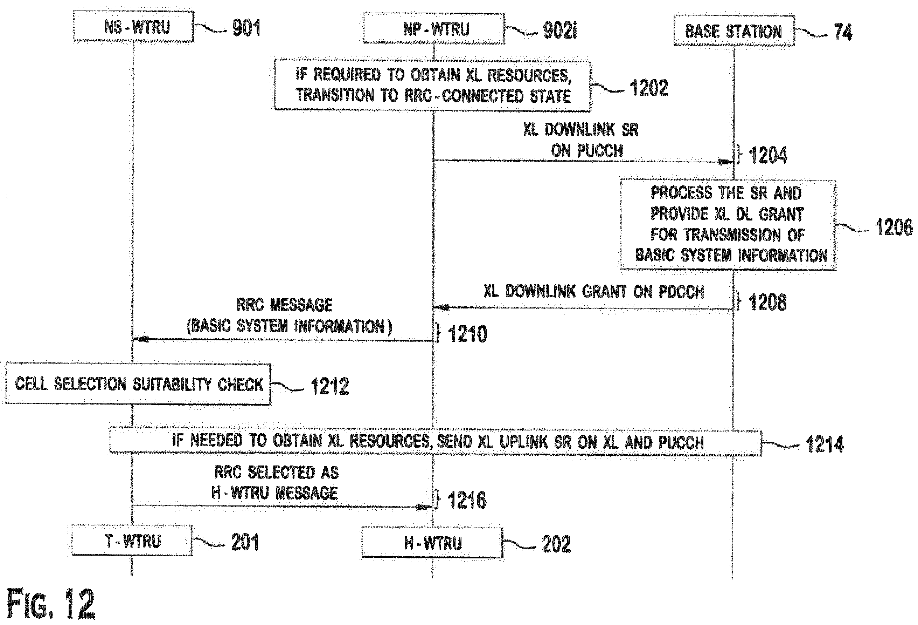

Basic system information and selected as H-WTRU messages may be transmitted in an unscheduled manner and without a need for uplink or downlink grants for the XL 203. The base station may account for such the unscheduled transmissions and may determine their impact on scheduled transmissions, for example, on other XLs. Alternatively, a NS-WTRU 901 may request a NP-WTRU 902ᵢ to obtain a base station grant for uplink transmission on the XL 203. To do so, the NS-WTRU 901 may send a scheduling request (SR) to the NP-WTRU 902ᵢ or may set an SR indication on a physical channel. The NP-WTRU 902ᵢ may also request a downlink grant on the XL 203 for use in sending basic system information and extended system information as described with reference to FIG. 12.

FIG. 12 shows a message flow diagram for resource allocation in W2W coverage. The NP-WTRU 902ᵢ transitions to the RRC-CONNECTED state 420 if required to obtain XL resources 1202. The NP-WTRU 902ᵢ then sends a SR for downlink transmission on the XL 203 1204. The SR maybe sent on a physical uplink control channel (PUCCH) in LTE, whereby the PUCCH may be extended to carry a SR. Further, the SR may indicate a need for transmitting basic system information. The base station 114 processes the SR 1206 and provides a grant for downlink XL transmission to the NP-WTRU 902ᵢ 1208.

The NP-WTRU 902ᵢ uses a resource defined by the grant to send basic system information to the NS-WTRU 901 1210. The NS-WTRU 901 performs cell selection suitability checks 1212, as described herein. If a grant is required to obtain resources for uplink transmission on the XL 203, a SR for uplink transmission on the XL 203 is sent using the XL 203 and PUCCH to the base station 114. Then, the NS-WTRU 901 sends a selected as H-WTRU message to the NP-WTRU 902ᵢ 1216 and the NS-WTRU 901 becomes the T-WTRU 201 and the NP-WTRU 902ᵢ becomes the H-WTRU 202.

It is noted that if the NP-WTRU 902ᵢ is not selected, the NS-WTRU 901 may exchange association information messages with another NP-WTRU and receive basic system information from the other NP-WTRU. In addition, the NS-WTRU 901 may perform a cell selection suitability check.

After the H-WTRU 202 is selected, association between the T-WTRU 201 and the H-WTRU 202 may be performed and registered with the network. Further, configuration information may be obtained from the network. In distributed control, the base station may not know higher layer identifiers associated with the NS-WTRU, such as S-TMSI, Globally Unique Temporary Identifier (GUTI), IMSI, and the like.

In centralized control, association between the T-WTRU 201 and the H-WTRU 202 may be indicated to the network irrespective of whether it is a first registration with the MME 142 (based on TA List from a TA update (TAU) procedure) or a subsequent association due to mobility or other reasons within the same MME. The T-WTRU 201 and H-WTRU 202 may exchange higher layer signaling to form the association and receive network approval and configuration information. In distributed control, on the other hand, the association may only be indicated to the network if the association is a first registration within the MME or if there is a need for indicating the association to the network due to a TA change per TAU procedure.

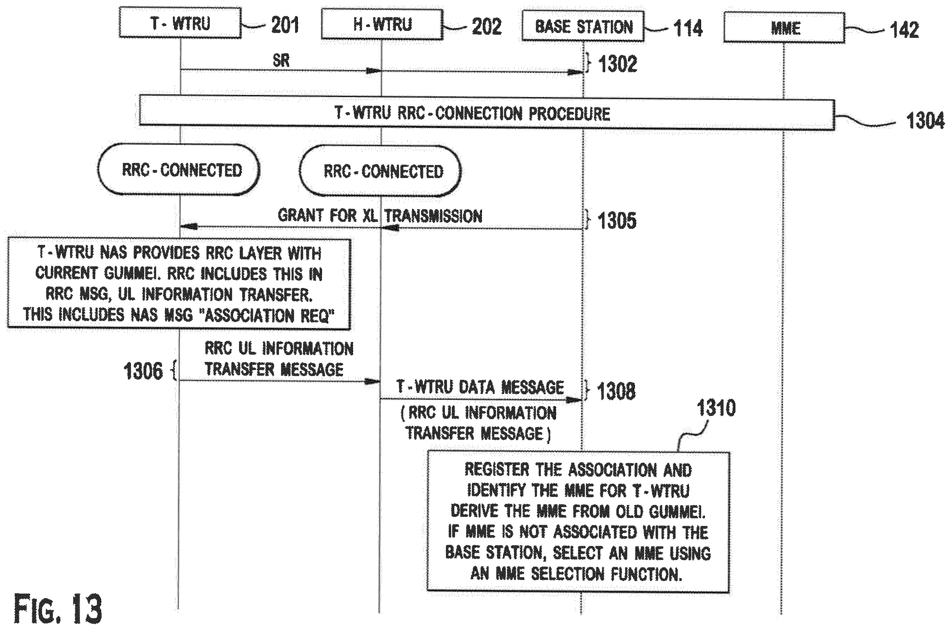

FIG. 13 shows a message flow diagram for association formation in distributed control. The network requires to be updated about the association formation between the T-WTRU 201 and H-WTRU 202. The T-WTRU 201 sends a scheduling request message to the H-WTRU 202 to indicate that the T-WTRU 201 has data to transmit 1302. The H-WTRU 202 forwards the SR to the base station 114. The T-WTRU 201 then moves to the RRC-CONNECTED state 420 by executing an RRC connection procedure 1304. The base station 114 processes the SR and provides a grant for XL 203 uplink transmission 1305. The grant for XL 203 uplink transmission may provide resource on which the T-WTRU 201 may send an RRC uplink information transfer message.

After receiving the grant for XL 203 uplink transmission, the T-WTRU 201 transmits the RRC uplink information transfer message to the H-WTRU 202 1306. The RRC uplink information transfer message may include an association request message from the T-WTRU's 201 NAS. The association request message may include information about the T-WTRU 201 and the requested association with the H-WTRU 202. Further, the RRC uplink information transfer message may include a current Globally Unique MME Identifier (GUMMEI), or a temporary identifier, such as S-TMSI/GUTI. The association request message may be ciphered and integrity-protected at the NAS level based on T-WTRU 201 ciphering keys.

The H-WTRU 202 forwards RRC uplink information transfer message to the base station as a tunneled T-WTRU 201 data message 1308 on a data radio bearer (DRB). The base station 114 registers the association between the T-WTRU 201 and H-WTRU 202 and identifies the MME associated with the T-WTRU 201. The base station 114 may determine the MME based on an old Globally Unique MME Identifier (GUMMEI) of the T-WTRU 201. If the identified MME is not associated with the base station, the base station selects an MME using an MME selection function. It is noted that additional signaling may be performed in FIG. 13 and elsewhere herein.

An S1 application protocol (S1 AP) in accordance with an air interface, such as LTE, may be configured to include XL 203 association information, XL 203 common paging information, (for example, XL-IMSI, common DRX), and the like.

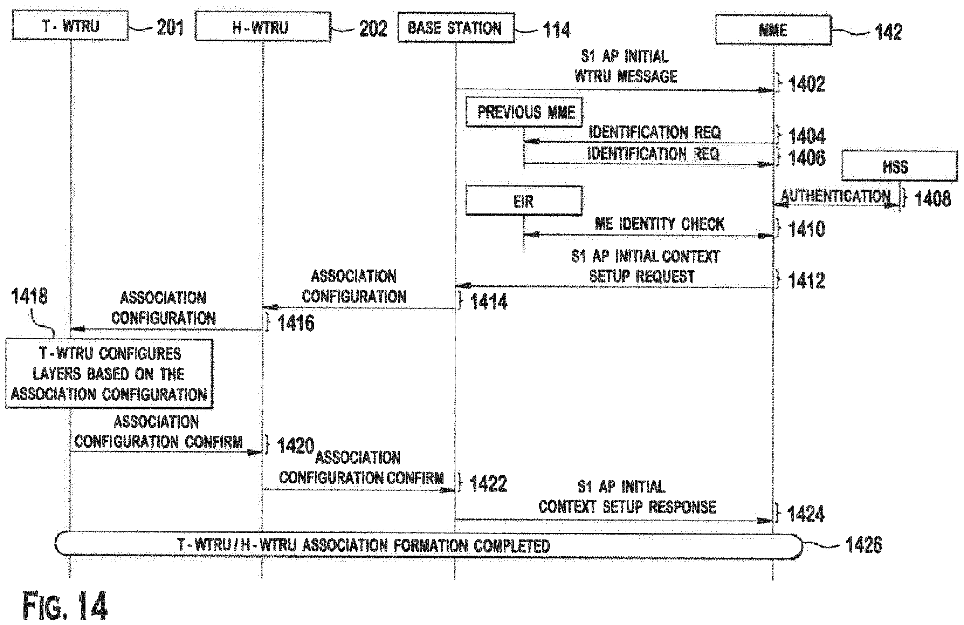

FIG. 14 shows a message flow diagram for association formation. The base station sends an S1 AP initial T-WTRU message to the MME 142 1402. If the MME 142 is not aware of the T-WTRU's 201 context, the MME may request an identity associated with the T-WTRU 201 from an MME that was previously associated with the T-WTRU 201 1404 and may receive the identity 1406. Alternatively, the MME 142 may request the identity associated with the T-WTRU 201 from the T-WTRU 201.

Further, the MME 142 may exchange messages associated with Authentication, Authorization and Accounting (AAA) information for authentication or security with a Home Subscriber Server (HSS) 1408. Further, the MME 142 may perform a Mobile Equipment (ME) Identity check for the T-WTRU 201 with a Equipment Identity Register (EIR) 1410. After completing authentication, security and ME identity check, the MME 142 may permit the association between the T-WTRU 201 and the H-WTRU 202. In the case of an emergency call, the MME 142 may forego exchanging AAA information with the HSS.

The MME 142 may register the association between the T-WTRU 201 and the H-WTRU 202. The MME 142 may also generate a common paging cycle, XL-IMSI, and the like in order to allow for common paging between the T-WTRU 201 and the H-WTRU 202.

The MME 142 then sends an S1 AP initial context setup request message to the base station 114 1412. The S1 AP initial context setup request message may provide the base station 114 with information associated with the association between the T-WTRU 201 and the H-WTRU 202. S1 AP messaging for the LTE air interface may be configured to include association information (including a common paging XL-IMSI and common DRX parameters) for the XL 203. The MME 142 may also send to the base station 114 a security context for the T-WTRU 201, and may forward configuration information to the base station 114 to be used for transmitting the association information to the T-WTRU 201 via the H-WTRU 202.

The base station 114 forwards the association information received from the MME 142 to the H-WTRU 202 in an association configuration message 1414 which may be carried in a data message. As described herein, the association information may include a common paging XL-IMSI or common DRX parameters. The base station 114 may also send a grant for downlink transmission on the XL 203 to the H-WTRU 202. The H-WTRU 202 may configure its paging and DRX based on the association configuration. The H-WTRU 202 sends the association configuration to the T-WTRU 201 1416 in an RRC message, for example, using the grant for downlink transmission on the XL 203. The T-WTRU 201 configures its layers based on the association configuration 1416 and sends an association configuration confirmation to the H-WTRU 202 in an RRC message 1420. The association configuration confirmation indicates that the T-WTRU 201 has been configured in accordance with the association information.

The H-WTRU 202 forwards the association configuration confirmation message to the base station 114 1422, for example, in a data message on the H-WTRU's 202 TRL 204 with the base station 114. The base station 114, in turn, sends an S1 AP initial context setup response to the MME 142 indicating the configuration of the T-WTRU 201 and the association between the T-WTRU 201 and the H-WTRU 202 is formed 1426.

After forming the association the T-WTRU 201 and the H-WTRU 202 may be configured in accordance with the DRX configuration in the association information and, accordingly, may have common DRX cycles. The T-WTRU 201 and the H-WTRU 202 may also transition to the RRC-IDLE state 410 and employ DRX if they do not have data to transmit or receive. In the RRC-IDLE state 410, the T-WTRU 201 and the H-WTRU 202 may wake up and exchange keep alive messages in order to maintain the association and ensure that the association is valid and viable. The exchange of keep alive messages is provided for by the common DRX cycles of the T-WTRU 201 and the H-WTRU 202. Through the exchange of keep alive messages, the T-WTRU 201 may verify that that H-WTRU 202 is able to perform its role on the XL 203.

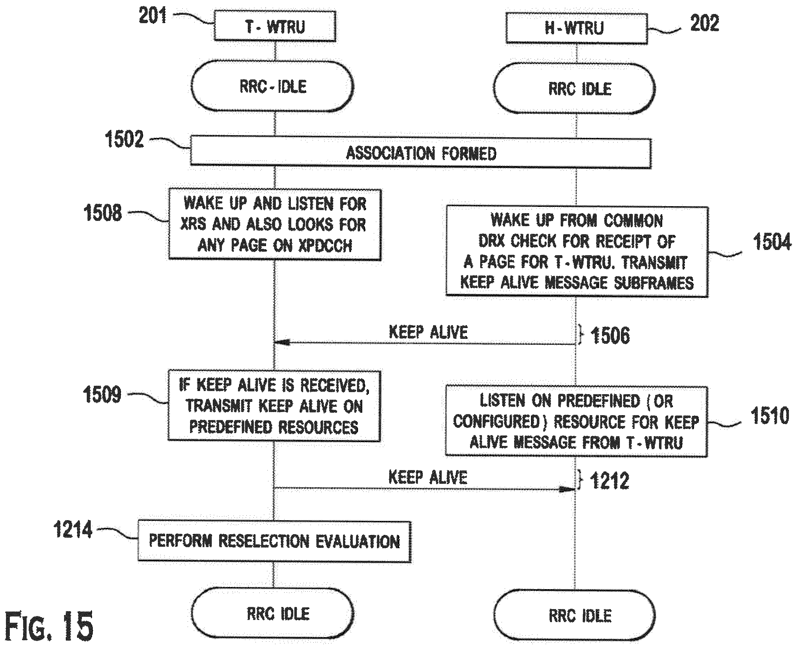

FIG. 15 shows a message flow diagram for keep alive message exchanges. The T-WTRU 201 and the H-WTRU 202 have formed an association 1502 and are both in the RRC-IDLE state 410. The T-WTRU 201 and the H-WTRU 202 may have a common DRX cycle. The H-WTRU 202 wakes up every DRX cycle and determine if a page directed to the T-WTRU 201 is received by the H-WTRU 202 1504. The page may be received on the TRL 204 of the H-WTRU 202. The H-WTRU 202 transmits a keep alive message to the T-WTRU 2011506. The keep alive message may be transmitted on a predefined number of subframes after a paging occasion (PO).

The T-WTRU 201 also wakes up during DRX and determines if an XL reference signal (XRS) or a page is received 1508. The T-WTRU 201 may also receive a keep alive message from the H-WTRU 202. If the keep alive message is received, the T-WTRU 201 transmits a keep alive message to the H-WTRU 202 using predefined resources 1809. The H-WTRU 202 awaits receipt of the keep alive message from the T-WTRU 201 on a predefined or configured resource 1510. As shown in FIG. 15, the H-WTRU 202 receives the keep alive message from the T-WTRU 2011212. The T-WTRU 201 also performs reselection evaluation 1214 as described herein. The T-WTRU 201 and the H-WTRU 202 may remain in the RRC-IDLE state 410 if there is no data for transmission on the XL 203.

Keep alive messages may be physical layer message sequences and may be exchanged in the normal control zone (NCZ) of the XL 203 as described herein. Keep alive messages may also provide fine tuning for timing and frequency synchronization at DRX wake up.

In the RRC-IDLE state 410, keep alive messages may be used by the H-WTRU 202 and the T-WTRU 201 to detect mobility. If a keep alive message is not received by a T-WTRU 201, the T-WTRU 201 may determine that the association with the H-WTRU 202 is no longer valid and triggers neighbor discovery and repeats association formation with the H-WTRU 202, or form a new association with a different WTRU. If a keep alive message is not received by the H-WTRU 202, the H-WTRU 202 may remove retained association-related information and indicate to the network that the association is no longer valid. The network, on the other hand, may clear the context of the association.

The H-WTRU 202 may release the XL 203 if, for example, its battery status reaches a threshold or if it has to service its own data, or based on a suitability index parameters. The H-WTRU 202 may explicitly indicate the release of the XL 203 to the network or the T-WTRU 201 by sending an RRC association release message. Upon receipt of the RRC association release message, the network may facilitate transferring the XL 203 of the T-WTRU 201 to another H-WTRU. The network may also indicate the transfer of the XL 203 to the T-WTRU 201 via the H-WTRU 202.

After exchanging keep alive messages or before transmitting a keep alive message to the H-WTRU 202, as described with reference to FIG. 15 herein, the T-WTRU 201 may perform H-WTRU reselection evaluation. Performing reselection evaluation may be based on a signal strength of the keep alive message received from the H-WTRU 202. If the signal strength of the received keep alive message is above a threshold, the T-WTRU may remain in the RRC-IDLE state 410 and may not perform reselection evaluation. The threshold may be predefined or may be updated semi-statically or dynamically. If the signal strength of the received keep alive message is below the threshold for a pre-defined period of time, the T-WTRU 201 may trigger neighbor discovery or receive network assistance in finding another H-WTRU. Network assistance may be facilitated by the XL 203 of the T-WTRU 201 with the present H-WTRU 202.

The T-WTRU 201 may also periodically check and determine if it has moved into a coverage area of the network. The T-WTRU 201 may use a suitability criteria or W2W policy to determine if a suitable or acceptable cell is found. When the T-WTRU 201 successfully moves into network or infrastructure coverage, the T-WTRU 201 may stop transmitting keep alive messages to the H-WTRU 202. Because the H-WTRU 202 may not detect a keep alive message from the T-WTRU 201, the H-WTRU 202 may determine that the T-WTRU 201 does not seek to maintain the association. Alternatively, the T-WTRU 201 may explicitly indicate to the network or H-WTRU 202 that it seeks to terminate the association.

In group mobility, where the H-WTRU 202 selects a new cell as part of its cell reselection procedure, the H-WTRU 202 may update the T-WTRU 201 if there is a change in basic system information. The T-WTRU 201 may use the W2W coverage suitability criteria based on the updated basic system information. If the tracking area changes and where a new tracking area is not part of the tracking area list, the T-WTRU 201 may perform TAU and inform the network that the association remains valid.

Association tracking is described herein. In LTE systems, WTRUs in the RRC-IDLE mode 410 are known at the tracking area level by the MME 142. Similarly, in W2W coverage, WTRUs in the RRC-IDLE state 410 may be known at the TA level by the MME 142. Further, the association between the T-WTRU 201 and H-WTRU 202 may also be known at the MME.

When the T-WTRU 201 and the H-WTRU 202 are in the RRC-IDLE state 410, the association between the T-WTRU 201 and the H-WTRU 202 may be tracked at the TA level and maintain by the MME 142. When there is a change in the association between the T-WTRU 201 and the H-WTRU, (for example, due to mobility), the association information is updated at the MME 142. The base station associated with the cell in which the association is formed may be aware of the association during association formation, but may remove the context of the association once the T-WTRU 201 transitions to the RRC-IDLE state 410 after the association is formed. It is noted that centralized control allows for tracking the association between the T-WTRU 201 and the H-WTRU 202 by the MME 142 as the MME 142 receives association- related information from the base station 114. The base station 14 is aware of the association because, as described herein, prior to H-WTRU selection, candidate NP-WTRUs 902 transmit neighbor discovery reports to the base station.

Further, when the association between the T-WTRU 201 and the H-WTRU 202 changes, the H-WTRU 202 transitions to the RRC-CONNECTED state 420 and alerts the network of the change in the association.

A T-WTRU 201 in the RRC-IDLE state 410 may maintain association with only one H-WTRU 202 in order to minimize overhead. Alternatively, the T-WTRU 201 may maintain associations with multiple H-WTRUs and if an association with a H-WTRU 202 fails, the T-WTRU 201 may resort to an association with a backup H-WTRU for XL 203 establishment.

Alternatively, the association between the T-WTRU 201 and the H-WTRU 202 may be tracked by the T-WTRU 201 and H-WTRU 202 when the T-WTRU 201 and H-WTRU 202 are in the RRC-IDLE state 410. The T-WTRU 201 may be configured for common paging and DRX and may receive a XL-IMSI, a XL -S-TMSI, or a TAI List during association formation or using tracking area updates. Further, the MME 142 may communicate with the T-WTRU 201 using common paging and the XL-IMSI, XL -S-TMSI, or TAI List. After the association is formed, subsequent association formation updates for the T-WTRU 201 within the TAI list may not be communicated to the network and may only be known by the T-WTRU 201 and H-WTRU 202.

The T-WTRU 201 may provide the H-WTRU 202 with its XL-IMSI, XL-S-TMSI, common paging, or DRX information using the selected as H-WTRU message. The H-WTRU 202 may monitor the XL-S-TMSI on behalf of the T-WTRU 201. To receive paging messages on behalf of the T-WTRU 201, the H-WTRU 201 may adhere to the common paging cycle of the T-WTRU 201.

When the T-WTRU 201 moves to a cell that belongs to a tracking area code (TAC) that is not on the TAI list, the T-WTRU 201 triggers a tracking area update (TAU) and informs the network. Further, the T-WTRU 201 may include its XL-IMSI, XL-S-TMSI, or common paging information with the TAU. The network may determine whether to provide the T-WTRU 201 with a new XL-IMSI, or XL -S-TMSI, or updated common paging information. If the network provides the T-WTRU 201 with updated common paging information, the network may also update the H-WTRU 202 with the common paging information.

In DRX, the wake up periods for the T-WTRU 201 and the H-WTRU 202 in DRX may be offset by a number of sub-frames in order to allow the H-WTRU to process a received page and transmit the page to the T-WTRU 201 while the T-WTRU 201 is awake to receive the page.

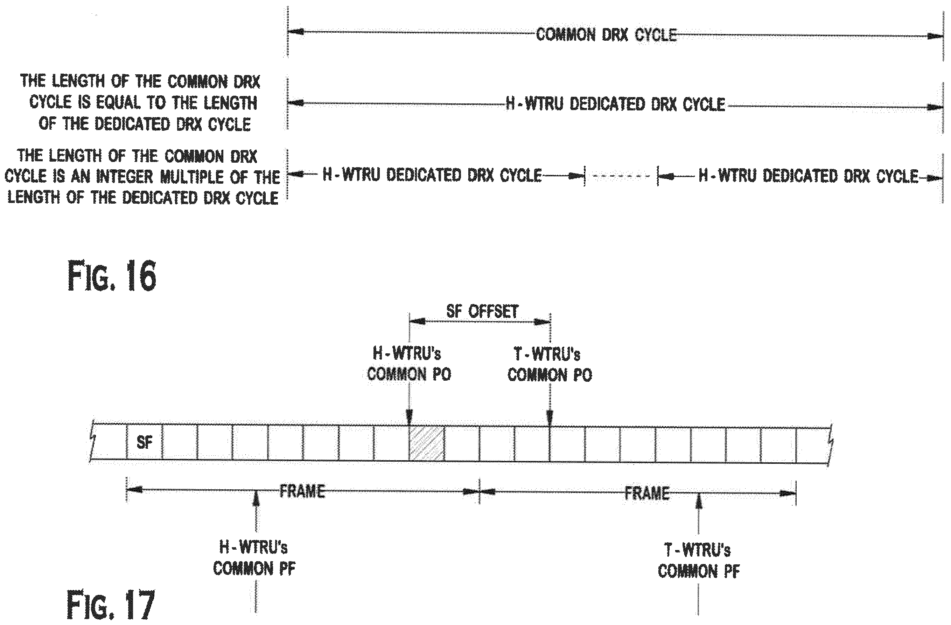

The H-WTRU 202 may have a second paging cycle in DRX (apart from the common DRX cycle) for receiving paging messages addressed to the H-WTRU 202 (i.e., paging messages that are associated with the TRL 204 of the H-WTRU 202). The second DRX cycle is referred to herein as the H-WTRU dedicated DRX cycle. The common DRX cycle of the T-WTRU 201 and the H-WTRU 201 for W2W coverage may have a length, paging frame or occasion that is equal to or an integer multiple of the length, paging frame or occasion of the dedicated DRX cycle of the H-WTRU's 202, as described with reference to FIG. 16.

FIG. 16 shows the relationship between the length of the common DRX cycle and the length of the dedicated DRX cycle. In a first instance, the length of the common DRX cycle is equal to the length of the dedicated DRX cycle. In a second instance in FIG. 16, the length of the common DRX cycle is a multiple of the length of the dedicated DRX cycle. As such, the wake period of the H-WTRU 202 for the common DRX cycle overlaps with the wake period for the dedicated DRX cycle and the H-WTRU 202 is not burdened additional wake periods as a result of its role on the XL 203.

As described herein, the T-WTRU 201 may be configured with an XL-IMSI or XL-S-TMSI for common paging during association formation. The XL-S-TMSI may be the same as the T-WTRU's 201 S-TMSI. In addition, a paging frame (PF) and a paging occasion (PO) may be calculated based on the XL-IMSI, whereby a WTRU-ID used for PF and PO calculation is XL-IMSI modulo 1024.

The PO of the T-WTRU 201 may be offset from the paging occasion of the H-WTRU 202 by a number of sub-frames (SFs), as described with reference to FIG. 17.

FIG. 17 shows a paging occasion offset. The PO of the H-WTRU 202 is offset by four SFs from the T-WTRU. As such, the H-WTRU 202 may decode a page and transmit the page on XL 204 in time for the T-WTRU 201 to be able to receive the page from the H-WTRU. The SF offset may be configured by the network and may be transmitted as part of basic system information or via dedicated signaling.

The H-WTRU 202 may monitor the paging channel on behalf of the T-WTRU 201 using the XL-S-TMSI and may monitor its own pages using its S-TMSI. The network may use the H-WTRU's 202 S-TMSI to page the H-WTRU 202 based on a modified PO or PF if the association between the T-WTRU 201 and the H-WTRU 202 is tracked by the MME 142. For paging the T-WTRU 201, the network may transmit a page addressed by XL-S-TMSI and the H-WTRU 202 may decode the page based on the XL-S-TMSI and transmit the page on the XL 203 in the unscheduled control zone (UCZ) using the XL paging channel (XPCH), as described herein. The T-WTRU 201 may receive the page and respond to the page if required.

Universal subscriber identity module (USIM) updates may be performed in order to assist in W2W coverage mode procedures. W2W policy may be stored in the USIM and updated. W2W policy may be used to determine when W2W coverage is triggered as part of cell selection or reselection. For example, W2W coverage may be triggered when a suitable cell without roaming is not found. Further, W2W coverage restrictions may be determined based on W2W policy.

XL 203 information, such as XL 203 carrier frequency (for each PLMN or for a set of PLMNs), neighbor discovery information (for each PLMN or for a set of PLMNs), or time or frequency resources or transmit power for neighbor discovery may be stored in the USIM and updated. Further, PLMNs for usage in W2W coverage or for initiating emergency calls in W2W coverage, or a list of forbidden TAs for W2W coverage may be stored in the USIM and updated.

As described herein, the XL 203 between the T-WTRU 201 and the H-WTRU 202 may be in accordance with an Open Systems Interconnection (OSI) protocol comprising a physical (PHY) and a medium access control (MAC) layer. For the uplink and the downlink, logical channels, transport channels, and physical channels for the XL 203 are described herein. The logical channels are mapped on to transport channels, which are, in turn, mapped on physical channels.

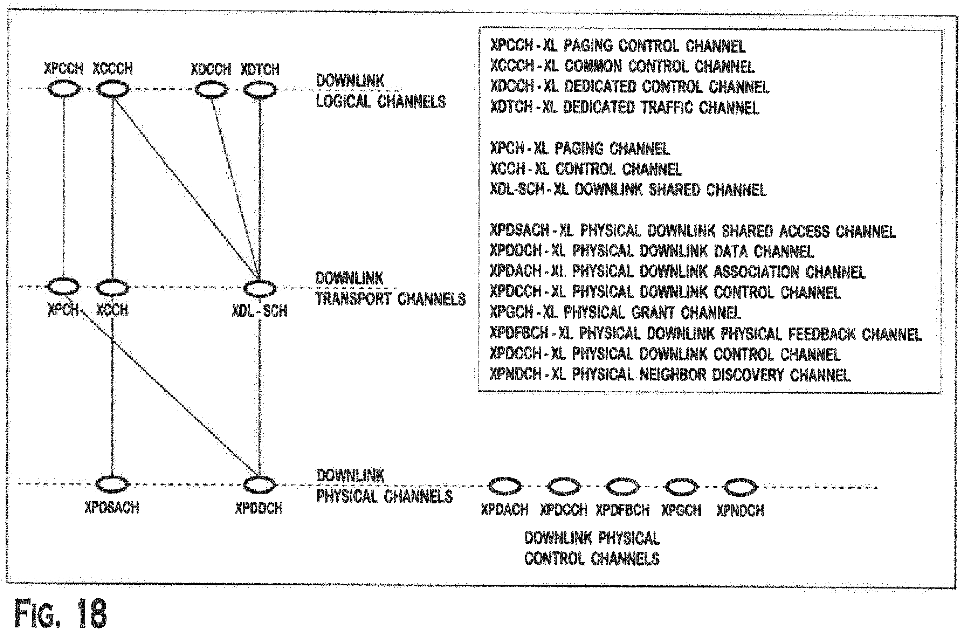

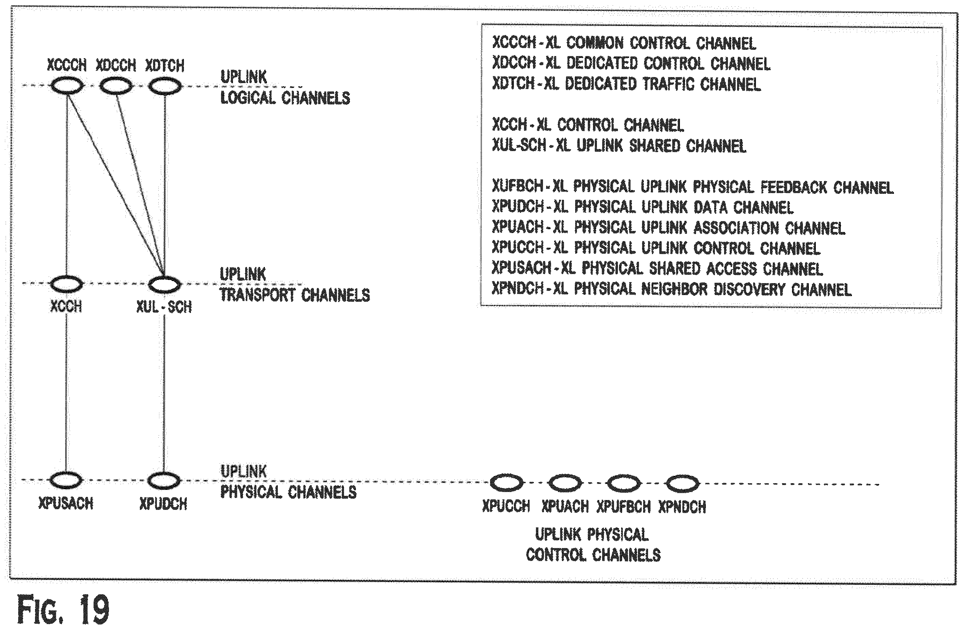

FIG. 18 shows the downlink channels and the downlink channel mapping for the XL and FIG. 19 shows the uplink channels and the uplink channel mapping for the XL.

The Cross Link Physical Neighbor Discovery Channel (XPNDCH) carries sequences used for neighbor discovery transmissions including the Neighbor Discovery Initiation Transmission (NDIT) and the Neighbor Discovery Response Transmission (NDRT). The XPNDCH may occupy a default or pre-defined symbol or sub-carrier resource location that may not be subject to an XL grant or scheduling. The XPNDCH may utilize code division multiple access (CDMA) with a code configuration being derived by a T-WTRU 201 or H-WTRU 202 according to a pre-defined algorithm. When the XL 203 bandwidth is more than a default frequency resource, the network may allocate additional sub-carrier resources for the XPNDCH in order to increase neighbor discovery capacity.

The Cross Link Physical Grant Channel (XPGCH) caries XL grant information including sub-carrier allocation, time division duplex (TDD) sub-frame duplex scheme, maximum XL power, dedicated XL channel code configuration, reference signal configuration, and the like. The XPGCH may occupy a default or pre-defined symbol location, which may not be subject to XL grants or scheduling. The XPGCH may use frequency division multiple access (FDMA) or CDMA with a configuration derived based on the configuration of an associated Cross Link Physical Downlink Association Channel (XPDACH) described herein. An unscheduled version of the XPGCH may be available only in XL coverage mode and in both the XL coverage and XL capacity modes. The H-WTRU 202 XL grant may specify complete resource configuration of the XPGCH for XL dedicated use of XL grant transmission from H-WTRU 202 to T-WTRU 202. Further, space division multiple access (SDMA), time division multiple access (TDMA), FDMA, or CDMA may be used for the XPGCH. The XPGCH may only be available for the downlink on the XL 203.

The Cross Link Physical Downlink Feedback Channel (XPDFBCH) carries channel state information (CSI) of the uplink on the XL 203 and ACK/NACK of uplink XL 203 data transmissions. The resource allocation for the XPDFBCH channel may be determined based on the H-WTRU 202 XL grant. The XDFBCH may use SDMA, TDMA, FDMA, or CDMA.

The Cross Link Physical Uplink Feedback Channel (XPUFBCH) carries CSI of the downlink for the XL 203 and ACK/NACK for XL downlink data transmissions. The resource allocation of the XPUFBCH may be determined based on the XL 203 grant for the T-WTRU 201. The XUFBCH may use SDMA, TDMA, FDMA, or CDMA.

The Cross Link Physical Downlink Control Channel (XPDCCH) carries data-related control information in order for the T-WTRU 201 to decode the XPDDCH in the same transmission time interval (TTI). The resource allocation for the XPDCCH may be determined based on the XL 203 grant for the H-WTRU 202. The XPDCCH may use SDMA, TDMA, FDMA, or CDMA.

The Cross Link Physical Uplink Association Channel (XPUACH) carries physical layer control information including XL 203 SRs, XL 203 measurement result indicators, and the like. The XPUACH may occupy a default or pre-defined symbol location, which may not be subject to XL 203 grants or scheduling. The XPUACH may use FDMA, or CDMA and the XPUACH configuration may be based on code configuration of the XPNDCH.

The Cross Link Physical Downlink Association Channel (XPDACH) carries physical layer control information including paging indicator, association information transmission or reception indicators or messages, XL grants or indicators, and the like. The XPDACH may occupy a default or pre-defined symbol location, which may not be subject to a XL grant or scheduling. The XPDACH may apply FDMA or CDMA with a configuration based on the code configuration the XPNDCH.

The Cross Link Physical Uplink Control Channel (XPUCCH) carries necessary control information for the H-WTRU 202 to decode the XPUDCH. The resource allocation of the XPUCCH may be determined based on the XL grant for the T-WTRU 201. The XPUCCH may use SDMA, TDMA, FDMA, or CDMA.

The Cross Link Physical Downlink Data Channel (XPDDCH) carries downlink XL 203 user data received from the MAC layer. The resource allocation of the XPDDCH may be determined based on the H-WTRU 202 XL grant. The XPDDCH may use SDMA, TDMA, FDMA, or CDMA.

The Cross Link Physical Downlink Shared Access Channel (XPDSACH) carries higher-layer control information including basic system information (BSI), initial configuration (including XL 203 grants), and the like. The XPDSACH occupies a default or pre-defined symbol location, which may not be subject to XL 203 grants or scheduling. The XPDSACH may use FDMA, or CDMA and the configuration for the XPCSACH may be based on the configuration of the XPDACH. The information necessary to decode the XPDSACH, such as transport format, may be pre-defined.

The Cross Link Physical Uplink Data Channel (XPUDCH) carries XL uplink user data received from the MAC layer. The resource allocation for the XPUDCH may be determined based on the T-WTRU 201 XL 203 grants. The XPUDCH may use SDMA, TDMA, FDMA, or CDMA.

The Cross Link Physical Uplink Shared Access Channel (XPUSACH) carries higher layer control information including XL 203 measurement results, and the like. The XPUSACH may occupy a default or pre-defined symbol location, which may not be subject to XL 203 grants or scheduling. The XPUSACH may use FDMA, or CDMA. The configuration for the XPUSACH may be based on the configuration of the XPUACH. Information necessary to decode the channel, such as transport format, may be pre-defined.

For the XL 203, the XPNDCH, XPDACH, XPUACH, XPDSACH, XPUSACH, and XPGCH (referred to herein as unscheduled channels) do not require XL 203 grants, whereby information may be transmitted or received with a set of pre-defined procedures. For example, a H-WTRU 202 may use the XPDSACH to transmit BSI to a T-WTRU 202 during an on-going neighbor association procedure without a grant from the network. Further, although the XPDSACH transmission may not require a network grant, a pre-defined protocol including all necessary information required to detect and decode the channel may be followed. For example, the protocol may include XPDSACH coding, modulation, MAC PDU information, and the like when the XPDSACH is transmitted in a neighbor discovery procedure. Because the XPNDCH, XPDACH, XPUACH, XPDSACH, XPUSACH, and XPGCH are unscheduled, contention may occur. Further, schemes for CDMA, such as, spreading with different orthogonal sequences, may be used to minimize the probability of contention. As such, different XPDSACHs may be spread using orthogonal spreading sequences.

On the other hand, the XPDFBCH, XPUFBCH, XPDCCH, XPUCCH, XPDDCH, XPUDCH, and XPGCH (referred to herein as scheduled channels) may be used when an XL 203 grant is available or after an XL 203 grant is received from the network. Therefore, XL 203 physical layer transmission is allowed without network involvement, for example, when an out-of-coverage WTRU is establishing higher layer signaling in a neighbor association process. The unscheduled channels may be used in XL coverage mode due to the lack of T-WTRU 201 association with the network. In both the XL coverage and capacity modes, when the XL 203 is established and a grant is received, of the unscheduled channels only the XPNDCH may be utilized. As such neighbor discovery may be performed independently. However, communication specific to the XL 203 may be carried on the scheduled channels in accordance with network grants.

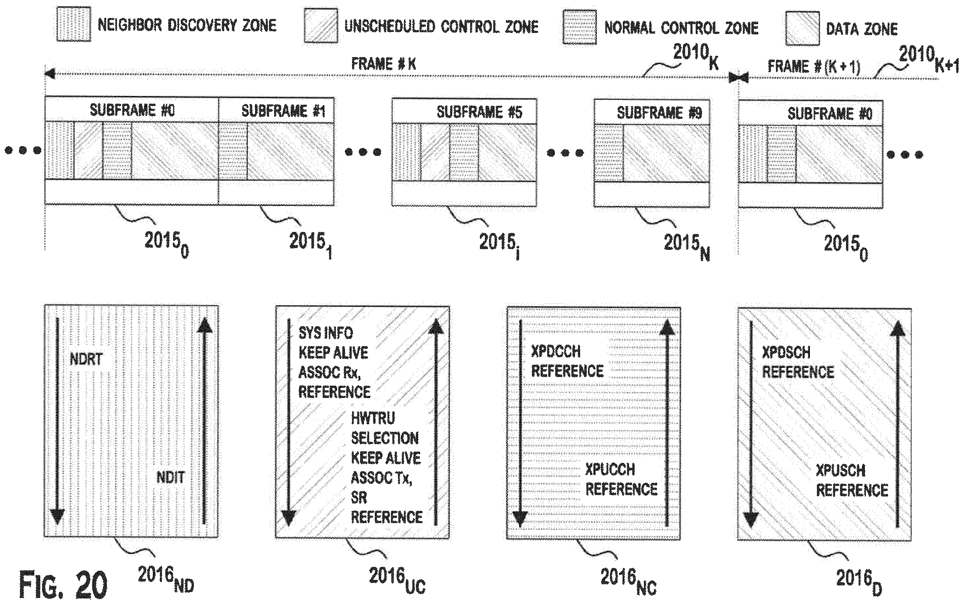

FIG. 20 shows a frame structure for the PHY layer of the XL 203. Frame k 2010ₖ and frame k+1 2010ₖ₊₁ (singularly referred to hereinafter as frame 2010) are shown in FIG. 20. Each frame 2010 comprises one or more subframes 2015₀, ..., 2015ᵢ, ..., 2015_{N} (collectively referred to hereinafter as subframes 2015_{0-N} and singularly referred to hereinafter as subframe 2015). Each subframe 2015 comprises one or more zones (collectively referred to hereinafter as zones 2016_{1-M} and singularly referred to hereinafter as zone 2016). The zone 2016 may be used for data or control information communication.

Four types of zones 2016_{1-M} may be utilized in a frame 2010 of the XL 203; a neighbor discovery zone (NDZ) 2016_{ND}, an unscheduled control zone (UCZ) 2016uc, a normal control zone (NCZ) 2016_{NC}, and a data zone (DZ) 2016_{D}. The zones 2016_{1-M} of a subframe 2015 may comprise one or more of the four types of zones. The NDZ 2016_{ND}, UCZ 2016_{UC}, and NCZ 2016_{NC} are used for control information communication, whereas the DZ 2016_{D} is used for data communication, as described herein.

In the NDZ 2016_{ND}, the T-WTRU 201 transmits neighbor discovery initiation transmission (NDIT) to the H-WTRU 202 and receives a neighbor discovery response transmission (NDRT) from the H-WTRU 202. The NDZ 2016_{ND} may occur twice in every frame 2010; once for the NDIT and once for the NDRT. Alternatively, the NDZ 2016_{ND} may be considered part of the subframe 2016 structure, whereby the subframe may be in the same direction as the NDZ 2016_{ND}, i.e., transmit or receive, or downlink or uplink.

The UCZ 2016_{UC} may have a predetermined set of resources that may be in every frame or, alternatively, in certain frames. The resources for the UCZ 2016_{UC} may be based on the SFN. For example, all the XL 203 in a cell may have a UCZ 2016uc in the same frame. The UCZ 2016uc may be used by the T-WTRU 201 to transmit to a H-WTRU 202 that it has for the role. The UCZ 2016_{UC} may also be used by the H-WTRU 202 to transmit basic system information to T-WTRU 201 in order to enable association formation. The transmissions between the T-WTRU 201 and the H-WTRU 202 may occur prior to association formation and may be performed without scheduling or assigned resources from the base station 114. Multiple H-WTRUs 202 may transmit the basic system information in the same UCZ 2016_{UC}, which may allow for a diversity benefit. Selected as H-WTRU 202 messages from multiple T-WTRUs 201 may overlap in the same UCZ 2016_{UC} but may be separated, for example, using physical layer scrambling.

The NCZ 2016_{NC} may occur in every subframe 2016 and may be used for the transmission of the control channels XPDCCH and XPUCCH, keep alive messages, and association messages. Multiplexing between for information carried on the NCZ 2016_{NC} may be performed. The DZ 2016_{D} is used to transmit data transport blocks (TBs) between the T-WTRU 201 and the H-WTRU 202, where reference signals that enable the WTRUs to make measurements of the XL 203 are carried. All user data (for example, excluding control information) for the T-WTRU 201 is carried on the DZ 2016_{D} on the XL 203.

A WTRU in the XL-Inactive substate 520 may only transmit or receive in the UCZ 2016_{UC} and NCZ 2016_{NC}. Further, a WTRU in the XL-Active substate 540 may transmit or receive on the DZ 2016_{D}.

Table 1 shows a relationship between messages transmitted or received on the XL 203, their associated physical, transport, or logical channels, and the zone 2016 on which they are carried.

**Table 1: Relationship between messages transmitted or received on the XL 203, their associated physical, transport, or logical channels, and the zone 2016 on which they are carried.**

| XL message | Channel(s) | Zone |
|---|---|---|
| SR sent from T-WTRU | XPUCCH/ XPCUCCH/ XULCCH/ XPUACH | UCZ |
| ACK for SR | | UCZ |
| XL grant sent to H-WTRU | PDCCH (LTE) | |
| XL grant sent to T-WTRU | XPCCH/XPCDCCH/XCCCH | UCZ |
| Initial configuration message | XPCCH/ XPCDCCH | UCZ |
| Extended System Information message | XCCCH/XDL-SCH/ XPDSCH | DZ |
| SR for XL sent from H-WTRU | PUCCH (LTE) | N/A |
| SR for XL sent from H-WTRU | MAC control element on UL-SCH(LTE) | N/A |
| Paging message from H-WTRU to T-WTRU | XPCH | UCZ |
| Paging indication message | | UCZ |
| Basic system information | XPDSACH/XCCCH | UCZ/DZ |
| NDIT/NDRT | XPNDCH | |
| Downlink association message, paging indicator, XL grant | XPDACH/XCCCH | |
| Uplink association message, XL measurement result indicator | XPUACH | |
| Selected as H-WTRU message | XPUSACH/XCCCH | |
| Initial configuration message | XPDSACH/XCCCH | |
| XL measurement results | XPUSACH | |
| sub-carrier allocation, TDD sub-frame duplex scheme, maximum cross link power, dedicated cross link channel code configuration, reference signal configuration | XPGCH | |
| CSI of the XL uplink, ACK/NACK of XL uplink data transmission | XPDFBCH | |
| XL downlink data received from the MAC layer | XPDDCH | |
| Control information for decoding the XPDDCH | XPDCCH | |
| CSI of XL downlink, ACK/NACK of XL downlink data transmission | XPUFBCH | |
| XL uplink data received from the MAC layer | XPUDCH | |
| Control information for decoding the XPUDCH | XPUCCH | |

The communication resources for XL 203 may be in a different band than the communication resources of the TRL 204 and may be said to be out-of-band with the resources of the TRL 204. Alternatively, the communication resource for XL 203 may be in the same band as the communication resources of the TRL 204 and may be said to be in-band with the resources of the TRL 204.

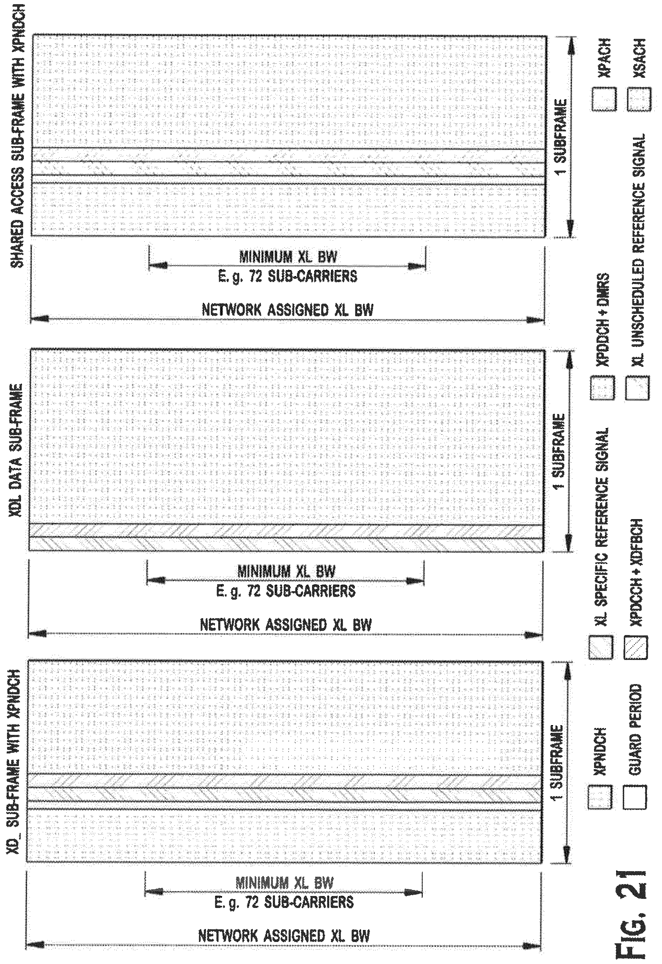

As an alternative to FIG. 20, different physical channels may be multiplexed into different XL 203 subframes as shown in FIG. 21.

FIG. 21 shows physical channel multiplexing for subframes. The MAC layer provides services to the Radio Link Control RLC layer in the form of logical channels. The type of logical channel is either a control channel used for transmission of control and configuration information or a traffic channel used for data. The XL 203 logical channels include XPCCH, XCCCH, XDCCH and XDTCH, as descried with reference to FIGs. 18 and 19.

The PHY layer of the XL 203 offers services to the MAC using transport channels including the XPCH, XCCH, XDL-SCH and XUL-SCH. Data on a transport channel may be organized into transport blocks and in each TTI one transport block of a certain size may be transmitted. When spatial multiplexing is used, for example, in MIMO, up to two transport blocks may be transmitted in one TTI.

The XL common control channel (XCCCH) logical channel may be used for exchanging higher layer messages on the XL and may carry basic system information and selected as H-WTRU messages. The XCCCH may be mapped to the XL control channel (XCCH) transport channel, which, in turn, may be carried on the XPCCH in the UCZ 2016_{UC}. Messages that are sent on the XCCCH may not require a XL uplink or downlink grant from the base station. The base station may account for transmissions on the XCCCH when scheduling XLs of other T-WTRUs and H-WTRUs.

### Embodiments:

1. A terminal wireless transmit/receive unit (T-WTRU) for establishing a cross link (XL) with a helper WTRU (H-WTRU).
2. The T-WTRU of embodiment 1, comprising a receiver configured to receive basic system information from the H-WTRU.
3. The T-WTRU as in any one of the preceding embodiments, further comprising a processor configured to determine whether to establish a XL with the H-WTRU based on the basic system information
4. The T-WTRU as in any one of the preceding embodiments wherein on a condition that the T-WTRU determines to establish a XL with the H-WTRU, the T-WTRU further comprises a transmitter configured to transmit a selected as H-WTRU message to the H-WTRU.
5. The T-WTRU as in any one of the preceding embodiments wherein the basic system information includes a public land mobile network (PLMN) Identity List, a tracking area code, or a cell identity associated with the H-WTRU.
6. The T-WTRU as in any one of the preceding embodiments wherein the processor determines not to establish the XL with the H-WTRU on a condition that the T-WTRU is barred from the cell associated with the H-WTRU.
7. The T-WTRU as in any one of the preceding embodiments wherein the processor determines to establish the XL with the H-WTRU on a condition that the T-WTRU requires the XL for an emergency call.
8. The T-WTRU as in any one of the preceding embodiments wherein the processor determines not to establish the XL with the H-WTRU on a condition that the PLMN is not a preferred PLMN.
9. The T-WTRU as in any one of the preceding embodiments wherein on a condition that the T-WTRU determines not to establish the XL with the H-WTRU, the transmitted is further configured to transmit an association message to a neighbor present WTRU (NP-WTRU).
10. A terminal wireless transmit/receive unit (T-WTRU) for maintaining association with a helper WTRU (H-WTRU).
11. The T-WTRU as in embodiment 10, further comprising a receiver configured to receive a first keep live message from the H-WTRU during a wake up period in discontinuous reception (DRX).
12. The T-WTRU as in any one of embodiments 10 or 11. further comprising a transmitter configured to transmit a second keep alive message to the H-WTRU.
13. The T-WTRU as in any one of embodiments 10-12 wherein the second keep alive indicates the T-WTRU seeks to maintain the association with the H-WTRU.
14. The T-WTRU as in any one of embodiments 10-13, wherein the T-WTRU performs reselection evaluation based on a signal strength of the first keep alive message.
15. The T-WTRU as in any one of embodiments 10-14, wherein on a condition that the signal of the first keep alive message is less than the threshold, the T-WTRU foregoes transmitting the second keep alive message.
16. The T-WTRU as in any one of embodiments 10-15, wherein a DRX cycle length cycle length of the T-WTRU is equal to or an integer multiple of the DRX cycle length of the H-WTRU.
17. The T-WTRU as in any one of embodiments 10-16, wherein a paging occasion of the T-WTRU is offset by a predetermined number of paging occasions from the H-WTRU.
18. The T-WTRU as in any one of embodiments 10-17, wherein the H-WTRU determines whether the page associated with the T-WTRU is received from a base station, and wherein the H-WTRU.
19. A base station for controlling helper wireless transmit/receive unit (H-WTRU) selection.
20. The base station as in embodiment 19 comprising a receiver configured to receive a first message from a first neighbor present WTRU (NP-WTRU), the first message indicating receipt of a neighbor discovery initiation transmission (NDIT) from a neighbor seeking WTRU (NS-WTRU).
21. The base station as in any one of embodiments 19 or 20 further comprising a processor configured to start a timer.
22. The base station as in any one of embodiments 19-21, wherein the processor further configured to select a H-WTRU upon expiration of the timer.
23. The base station as in any one of embodiments 19-22, further comprising a transmitter configured to transmit a neighbor discovery response message to the H-WTRU.
24. The base station as in any one of embodiments 19-23, wherein the neighbor discovery response message indicating selection of the H-WTRU to relay cross link (XL) data associated with NS-WTRU.
25. The base station as in any one of embodiments 19-24, wherein the receiver is further configured to receive a second message from a second NP-WTRU.
26. The base station as in any one of embodiments 19-25, wherein the second message indicating receipt of the neighbor discovery initiation transmission (NDIT) from the neighbor seeking WTRU (NS-WTRU).
27. The base station as in any one of embodiments 19-26, wherein the second message is received before the timer expires.
28. The base station as in any one of embodiments 19-27, wherein the H-WTRU is the first NP-WTRU or the second NP-WTRU.
29. The base station as in any one of embodiments 19-28, wherein the first NP-WTRU transitions to the RRC-CONNECTED state upon receiving the NDIT and the second NP-WTRU transitions to the RRC-CONNECTED state upon receiving the NDIT.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.
A1. A terminal wireless transmit/receive unit (T-WTRU) for establishing a cross link (XL) with a helper WTRU (H-WTRU), the T-WTRU comprising:
   a receiver configured to receive basic system information from the HWTRU; and
   a processor configured to determine whether to establish a XL with the HWTRU based on the basic system information, wherein on a condition that the TWTRU determines to establish a XL with the H-WTRU, the T-WTRU further comprises:
      a transmitter configured to transmit a selected as H-WTRU message to the H-WTRU.
A2. The T-WTRU of embodiment A1, wherein the basic system information includes a public land mobile network (PLMN) Identity List, a tracking area
   code, or a cell identity associated with the H-WTRU.
A3. The T-WTRU of embodiment A2, wherein the processor determines not to establish the XL with the H-WTRU on a condition that the T-WTRU is barred from the cell associated with the H-WTRU.
A4. The T-WTRU of embodiment A2, wherein the processor determines to establish the XL with the H-WTRU on a condition that the T-WTRU requires the XL for an emergency call.
A5. The T-WTRU of embodiment A2, wherein the processor determines not to establish the XL with the H-WTRU on a condition that the PLMN is not a preferred PLMN.
A6. The T-WTRU of embodiment A1, wherein on a condition that the T-WTRU determines not to establish the XL with the H-WTRU, the transmitted is further configured to transmit an association message to a neighbor present WTRU (NPWTRU).
A7. A terminal wireless transmit/receive unit (T-WTRU) for maintaining association with a helper WTRU (H-WTRU), the T-WTRU comprising:
   a receiver configured to receive a first keep live message from the HWTRU during a wake up period in discontinuous reception (DRX); and
   a transmitter configured to transmit a second keep alive message to the HWTRU,
   the second keep alive indicates the T-WTRU seeks to maintain the association with the H-WTRU.
A8. The T-WTRU of embodiment A7, wherein the T-WTRU performs reselection evaluation based on a signal strength of the first keep alive message, and wherein on a condition that the signal of the first keep alive message is less than the threshold, the T-WTRU foregoes transmitting the second keep alive message.
A9. The T-WTRU of embodiment A7, wherein a DRX cycle length cycle length of the T-WTRU is equal to or an integer multiple of the DRX cycle length of the HWTRU.
A10. The T-WTRU of embodiment A7, wherein a paging occasion of the T-WTRU is offset by a predetermined number of paging occasions from the H-WTRU.
A11. The T-WTRU of embodiment A7, wherein the H-WTRU determines whether the page associated with the T-WTRU is received from a base station, and wherein the H-WTRU.
A12. A base station for controlling helper wireless transmit/receive unit (H-WTRU) selection, the base station comprising:
   a receiver configured to receive a first message from a first neighbor present WTRU (NP-WTRU), the first message indicating receipt of a neighbor discovery initiation transmission (NDIT) from a neighbor seeking WTRU (NSWTRU);
   a processor configured to start a timer;
   the processor further configured to select a H-WTRU upon expiration of the timer; and
   a transmitter configured to transmit a neighbor discovery response message to the H-WTRU, the neighbor discovery response message indicating selection of the H-WTRU to relay cross link (XL) data associated with NS-WTRU.
A13. The base station of embodiment A12, wherein the receiver is further configured to receive a second message from a second NP-WTRU, the second message indicating receipt of the neighbor discovery initiation transmission (NDIT) from the neighbor seeking WTRU (NS-WTRU) and the second message being received before the timer expires.
A14. The base station of embodiment A13, wherein the H-WTRU is the first NPWTRU or the second NP-WTRU.
A15. The base station of embodiment A13, wherein the first NP-WTRU transitions to the RRC-CONNECTED state upon receiving the NDIT and the second NP-WTRU transitions to the RRC-CONNECTED state upon receiving the NDIT.

## Claims

1. A base station for selecting a helper wireless transmit/receive unit (H-WTRU), the base station comprising:
a receiver configured to receive at least one report message, each report message of the at least one report message indicating receipt of a discovery message by a corresponding neighbor present WTRU (NP-WTRU) from a neighbor seeking WTRU (NS-WTRU);
a processor configured to start a timer;
the processor further configured to, upon expiration of the timer, select a H-WTRU from among at least one NP-WTRU corresponding to the at least one report message, the at least one report message being received prior to an expiration of the timer; and
a transmitter configured to transmit a response message to the selected H-WTRU, the response message indicating selection of the H-WTRU to be a relay for the NS-WTRU.

2. The base station of claim 1, wherein the processor is configured to start the timer in response to a first-received report message among the at least one report message.

3. The base station of claim 1, wherein the processor is configured to measure a signal strength of the at least one report message and select the H-WTRU having a highest signal strength.

4. The base station of claim 1, wherein each of the at least one report message includes a suitability classification, and the processor is configured to select the H-WTRU based on the suitability classification included in each of the at least one report message.

5. The base station of claim 4, wherein the suitability classification corresponds to at least one of a battery status, a radio resource control (RRC) state, a hardware capability, a traditional radio link (TRL) quality, a user permission, or a mobility of a corresponding NP-WTRU, or a signal strength of the discovery message.

6. The base station of claim 1, wherein the receiver is configured to receive a plurality of report messages from a plurality of NP-WTRUs, each report message of the plurality of report messages indicating receipt of a discovery message from the NS-WTRU.

7. The base station of claim 6, wherein the processor is configured to start the timer in response to a first-received report message among the plurality of report messages.

8. The base station of claim 7, wherein the plurality of report messages are received prior to an expiration of the timer.

9. The base station of claim 7, wherein the processor is configured to measure a signal strength of the plurality of report messages and select the H-WTRU from among the plurality of NP-WTRUs having a highest signal strength.

10. The base station of claim 7, wherein each of the plurality of report messages includes a suitability classification, and the processor is configured to select the H-WTRU from among the plurality of NP-WTRUs based on the suitability classification included in each of the plurality of report messages.

11. The base station of claim 10, wherein the suitability classification corresponds to at least one of a battery status, a radio resource control (RRC) state, a hardware capability, a traditional radio link (TRL) quality, a user permission, or a mobility of a corresponding NP-WTRU, or a signal strength of the discovery message.

12. The base station of claim 1, wherein:
the receiver is configured to receive a first report message from a first NP-WTRU, the first message indicating receipt of the discovery message from the NS-WTRU;
the processor is configured to start the timer in response to receiving the first message;
the receiver is further configured to receive a second report message from a second NP-WTRU, the second report message indicating receipt of a discovery message from the NS-WTRU and the second message being received before the timer expires; and
the processor is further configured to select the H-WTRU from among the first NP-WTRU and the second NP-WTRU upon expiration of the timer.

13. The base station of claim 12, wherein the processor is configured to measure a signal strength of the first message and the second message, and select the H-WTRU from among the first NP-WTRU and the second NP-WTRU having a highest signal strength.

14. The base station of claim 1, wherein the NS-WTRU is outside of a coverage area of the base station.

15. The base station of claim 1, wherein the response message configures a cross link (XL) between the selected H-WTRU and the NS-WTRU for relaying NS-WTRU data to the base station.
